# EUROPÄISCHE PATENTSCHRIFT

(11) **EP 3 541 595 B1**
(45) Veröffentlichungstag und Bekanntmachung des Hinweises auf die Patenterteilung: **31.08.2022**
(21) Anmeldenummer: 17797951.5
(22) Anmeldetag: 15.11.2017
(51) Int. Cl.: B29C 45/26, B29C 45/40

(54) **WERKZEUGELEMENT UND VERFAHREN ZUR ENTNAHME EINES FORMEINSATZES AUS EINEM WERKZEUGELEMENT**
TOOL ELEMENT AND METHOD FOR REMOVING A MOLD INSERT FROM A TOOL ELEMENT
ÉLÉMENT D'OUTIL ET PROCÉDÉ D'ÉLÈVEMENT D'UN INSERT DE MOULE D'UN ÉLÉMENT D'OUTIL

(30) Priorität: 16.11.2016 DE 102016121996
(43) Veröffentlichungstag der Anmeldung: 25.09.2019
(73) Patentinhaber: Braunform GmbH, 79353 Bahlingen (DE)
(72) Erfinder: ENGEL, Christophe, 67210 Obernai (FR); HOPFNER, Guillaume, 67390 Marckolsheim (FR)
(74) Vertreter: Dantz, Jan Henning
(86) Internationale Anmeldenummer: PCT/EP2017/079269
(87) Internationale Veröffentlichungsnummer: WO 2018/091499

(56) Entgegenhaltungen:
- DE-A1-102007 053 123
- DE-U1-202013 007 964
- JP-A- H0 839 616
- JP-A- S57 152 908
- US-A- 5 249 947
- US-A1- 2005 266 111
- US-B1- 7 204 685

## Beschreibung

Die vorliegende Erfindung betrifft ein Werkzeugelement nach dem Oberbegriff des Anspruchs 1, ein Werkzeug und ein Verfahren zur Entnahme eines Formeinsatzes aus einem Werkzeugelement.

Die DE 10 2007 053 123 C5 offenbart ein gattungsgemäßes Werkzeugelement für ein Spritzgusswerkzeug. Es weist eine erste Baueinheit mit einem Formeneinsatz und einer Auswerfereinrichtung auf, welche miteinander lösbar verbunden sind und mit einer zweiten Baueinheit, der Stamm-Baueinheit, durch einen Verriegelungsmechanismus verbunden werden können. Dabei ist die erste Baueinheit mit der zweiten Baueinheit zusätzlich über mechanische Verbindungsmittel in Form von zwei Schrauben verbunden. Diese Schrauben müssen erst gemeinsam mit dem Verriegelungsmechanismus gelöst werden, um die erste Baueinheit von der zweiten Baueinheit zu trennen. Die Bauweise dieses Werkzeugelements hat sich an sich bewährt. Die DE 10 2011 007 999 A1 offenbart ein Werkzeugelement in welchem ein Formeinsatz mit einer randseitigen Klemmverbindung mit einer Leiste und mechanischen Verbindungsmitteln in Form von Schrauben gehalten wird. Zudem ist der Formeinsatz mit einer Auswerfereinrichtung verbunden, welche mittels einer Kupplung endständig gehalten wird. Eine Entnahme der Baueinheit aus Formsatz und Auswerfereinrichtung kann nur durch Lösen der Verbindungsmittel und durch Lösen der Kupplung erfolgen. Für diese Entnahme sind daher mehrere Handgriffe notwendig und beinhaltet u.a. das Aufschrauben der randseitigen Klemmverbindung. Dies nimmt zusätzliche Arbeitszeit beim Wechselprozess der Formeinsätze in Anspruch und kompliziert die Handhabung, da einerseits das Halten des teilweise schweren Formeinsatzes und das Lösen der Schrauben zeitgleich erfolgen müssen.

Die DE 100 59 045 A1 offenbart ebenfalls eine Verschraubung des Formeinsatzes was zu ähnlichen Problemen führt wie beim vorgenannten Stand der Technik.

Die DE 10 2011 055 961 A1 offenbart eine Spritzgussvorrichtung in welcher eine nicht näher beschriebene Auswerferkupplung zur Kopplung eines Auswerferpakets vorgesehen ist. Dabei wird das Auswerferpaket in einem Rahmen gehalten.

Es kann jedoch bei entsprechend hoher Druckbelastung bei maßstabsgetreuer Umsetzung des Werkzeugelements ein Durchbiegen einiger verbauter plattenförmiger Elemente erfolgen, was zu einer geringeren Präzision, oder gar Spritzfehlern wie Gratbildung führt.

Ausgehend vom vorgenannten Stand der Technik soll die Wartung und der Austausch einzelner Bauteile der Baueinheiten des Werkzeugelements zusätzlich vereinfacht werden.

Die vorliegende Erfindung löst diese Aufgabe durch ein Werkzeugelement mit den Merkmalen des Anspruchs 1 und durch ein Werkzeug mit den Merkmalen des Anspruchs 17 und durch ein Verfahren mit den Merkmalen des Anspruchs 18.

Ein erfindungsgemäßes Werkzeugelement kann als erstes Werkzeugelement in einem Werkzeug zum Spritzgießen von Spritzgussteilen, insbesondere von Kunststoffteilen, eingesetzt werden.

Das erfindungsgemäße Werkzeugelement ist zumindest aus einer ersten Baueinheit und aus einer zweiten Baueinheit zusammengesetzt ist, wobei an der zweiten Baueinheit zumindest ein der ersten Baueinheit zugeordneter Formeinsatz zur Bildung des Formenhohlraums befestigt ist

In dem Werkzeugelement ist mit dem Formeinsatz eine Auswerfereinrichtung zum Auswerfen von fertig gespritzten Kunststoffteilen kombiniert.

Zumindest der eine Formeinsatz und die Auswerfereinrichtung bilden die erste Baueinheit aus. Die erste Baueinheit kann weitere Bauteile aufweisen. Allerdings kann die erste Baueinheit auch nur aus der Gesamtheit aus Auswerfereinrichtung und Formeinsatz bestehen.

Die erste Baueinheit ist lösbar an der zweiten Baueinheit des zugeordneten Werkzeugelements angeordnet, derart, dass die erste Baueinheit in einer vorbestimmten Stapelrichtung in die zweite Baueinheit zumindest bereichsweise ein- und/oder aufsteckbar und in Stapelrichtung gelagert ist.

Durch die zweifache Verriegelung der ersten Baueinheit wird die erste Baueinheit gegen unvorhersehbares Lösen gesichert. Zugleich werden wenige Arbeitsschritte benötigt um die Baueinheit vollständig zu lösen.

Die erste Baueinheit ist mit der zweiten Baueinheit durch einen Verriegelungsmechanismus verbunden. Der Verriegelungsmechanismus umfasst ein erstes Verriegelungsmittel und ein zweites Verriegelungsmittel. Der Verriegelungsmechanismus verriegelt mit dem ersten Verriegelungsmittel den Formeinsatz mit der Werkzeugeinheit an einer ersten Position und mit einem zweiten Verriegelungsmittel die Auswerfereinrichtung mit dem Formeinsatz an einer zweiten Position.

Ebenfalls erfindungsgemäß ist ein Werkzeugelement, welches als das vorgenannte erste Werkzeugelement oder als zweites Werkzeugelement in einem Werkzeug zum Spritzgießen von Kunststoffteile eingesetzt werden kann. Dieses Werkzeugelement kann somit den o.g. Verriegelungsmechanismus und die Baueinheit aus Formeinsatz und Auswerfereinrichtung aufweisen, welcher mit dem Verriegelungsmechanismus verriegelbar ist. Allerdings kann in dem vorliegenden erfindungsgemäßen Werkzeugelement auch eine erste Baueinheit aufweisen, die nur aus einem Formeinsatz besteht.

Das Werkzeugelement ist zumindest aus einer ersten Baueinheit und aus einer zweiten Baueinheit zusammengesetzt, wobei an der zweiten Baueinheit zumindest ein der ersten Baueinheit zugeordneter Formeinsatz zur Bildung des Formenhohlraums befestigt ist und wobei die erste Baueinheit lösbar an der zweiten Baueinheit des zugeordneten Werkzeugelements angeordnet ist. Die erste Baueinheit kann mehrere weitere Bauteile aufweisen oder auch nur den Formeinsatz umfassen.

Die erste Baueinheit ist in einer vorbestimmten Stapelrichtung in die zweite Baueinheit zumindest bereichsweise ein- und/oder aufsteckbar und in Stapelrichtung gelagert.

Die erste Baueinheit ist mit der zweiten Baueinheit durch einen Verriegelungsmechanismus verbunden, welcher derart ausgebildet ist, dass im entriegelten Zustand die erste Baueinheit aus der zweiten Baueinheit bereichsweise hervorsteht unter Bereitstellung einer Grifffläche zur Entnahme der ersten Baueinheit.

Das Hervorstehen der ersten Baueinheit kann durch ein Anheben der ersten Baueinheit aufgrund einer Zwangsführung während des Entriegelungsprozesses erreicht werden. Dadurch lässt sich die erste Baueinheit einfach aus dem Werkzeugelement entnehmen.

Vorteilhafte Ausgestaltungen der Erfindung sind Gegenstand der Unteransprüche-Es ist von Vorteil wenn das erste und das zweite Verriegelungsmittel einen Verriegelungsmechanismus aufweist, mittels welchem eine Entriegelungsposition und eine Verriegelungsposition des ersten als auch des zweiten Verriegelungsmittels einstellbar ist und welcher Verriegelungsmechanismus durch ein einziges Betätigungselement, welches vorzugsweise dem Werkzeugelement zugeordnet ist, bedienbar ist. Dadurch ist ein unkompliziertes Lösen möglich.

Die Verriegelungsmittel können vorteilhaft voneinander mechanisch entkoppelbar sein. Dadurch wird ein unbeabsichtigtes Entriegeln der ersten Baueinheit verhindert.

Die Auswerfereinrichtung kann im Werkzeugelement beweglich, insbesondere linear beweglich, angeordnet sein und der Verriegelungsmechanismus in Abhängigkeit von der Position der Auswerfereinrichtung im Werkzeugelement bereitstellbar sein. Die Positionierung der Auswerfereinrichtung vor dem Entriegelungsprozess wird nachfolgend auch als Bereitstellungsposition bezeichnet. Typischerweise wird die Position der Auswerfereinheit durch die Spritzgussmaschine gesteuert, so dass in dieser vorteilhaften Variante ein unsachgemäßer manueller Eingriff nicht erfolgen kann, sondern vorher die Bereitstellungsposition eingestellt werden muss.

Die Verriegelungsmittel können durch eines oder mehrere Betätigungselemente, insbesondere durch ein einziges Betätigungselement, bedienbar sein. Das Betätigungselement ist dabei dem Werkzeugelement zugeordnet. Das Betätigungselement weist vorteilhaft eine Werkzeugaufnahme für ein Handwerkzeug zur mechanischen Verbindung mit einem Werkzeug aufweist, wobei die Werkzeugaufnahme seitlich, insbesondere an einer zur Kontaktfläche mit einem zweiten Werkzeugelement benachbarten Seite, am Werkzeugelement angeordnet ist. Bevorzugt ist auch jedes andere Betätigungsmittel, welches nicht über eine Werkzeugaufnahme verfügt, von der besagten benachbarten Seite her bedienbar. Dadurch kann eine vereinfachte manuelle oder automatische Entnahme erfolgen.

Das Werkzeugelement kann mehrere im Wesentlichen identische erste Baueinheiten aufweisen, welche durch Betätigen des einzigen Betätigungselements von der zweiten Baueinheit lösbar sind. Dadurch wird die Entnahme besonders zeiteffizient.

Die Auswerfereinrichtung und der Formeinsatz sind vorteilhaft durch mechanische Verbindungsmittel miteinander, insbesondere lösbar, verbunden. Mechanische Verbindungsmittel sind beispielsweise Schrauben, Muttern und/oder Nieten. Ein Verriegelungsmittel, welches z.B. durch Längsverschiebung eine Verriegelungsposition einnimmt, ist im Kontext der vorliegenden Erfindung nicht als mechanisches Verbindungsmittel zu verstehen. So können beispielsweise beschädigte Auswerferstangen einfach und unkompliziert entnommen und/oder ausgetauscht werden.

Die ersten und/oder die zweiten Verriegelungsmittel sind vorteilhaft linear beweglich, insbesondere federnd gelagert sind. Das Betätigungselement kann vorteilhaft linear beweglich oder rotierbar gelagert sein. Insgesamt ist dadurch eine zuverlässige und leicht-lösbare Sicherung realisierbar.

Das erste mechanische Verbindungsmittel kann vorteilhaft bereichsweise als Zahnstange ausgebildet sein, wobei sich die Zahnung der Zahnstange in Eingriff mit einem Zahnrad oder einer Gegenzahnung des Betätigungsmittels befindet und somit einen besonders guten Wirkeingriff erreicht.

In einer vorteilhaften Ausführungsvariante erfolgt eine Gleitführung zwischen dem ersten mechanischen Verbindungsmittel und einem Kupplungsstück mit einem zapfenförmigen Vorsprung erfolgt, welcher mit dem zweiten mechanischen Verbindungsmittel wechselwirkt. Dadurch kann eine Kupplung mit vergleichsweise wenigen mechanischen Bauteilen erfolgen.

Der Formeinsatz, vorzugsweise eine Mehrzahl an Formeinsätzen des Werkzeugelements, kann auf einer oder mehreren Trägerplatten gelagert sein, welche sich im zusammengesetzen Zustand des Werkzeugelements zwischen dem Formeinsatz oder den Formeinsätzen und der zweiten Baueinheit befindet.

Zwischen jeweils zwei Anschlagseiten der ersten und der zweiten Baueinheit und/oder daran angebrachten mechanischen Verbindungsmitteln, welche Anschlagseiten die Beweglichkeit der ersten Baueinheit gegenüber der zweiten Baueinheit begrenzen zumindest eine Spaltbreite von zumindest 1µm, vorzugsweise zumindest 3 µm vorliegt.

Es kann eine Steckverbindung und/oder ein Sensor vorgesehen ist zum Überwachen des Kontaktes, beispielsweise des Kraftschlusses, der ersten Baueinheit und der zweiten Baueinheit. Die Steckverbindung kann beispielsweise einer Übertragung eines elektrischen Signals oder der Stromversorgung dienen. Die Steckverbindung kann über einen Stecker und eine Steckbuchse verfügen welche jeweils in einem der beiden Baueinheiten angeordnet sind. Der Stecker und die Steckbuchse sind jeweils in einem Steckergehäuse angeordnet. Dabei ist zumindest eines der beiden Steckergehäuse begrenzt beweglich an der ersten oder zweiten Baueinheit angeordnet

Weiterhin kann in einer bevorzugten Variante der o.g. Steckverbindung eine Zentrierung zum Zusammenführen des Steckers und der Steckbuchse vorgesehen sein.

Die Trägerplatte kann zumindest bereichsweise, insbesondere jedoch vollständig, aus einem wärmeleitfähigem Material gebildet sein mit einer größeren Wärmeleitfähigkeit als 70 W/(m*K) bezogen auf eine Temperatur von 20°C, also im Wesentlichen mit einer größeren Wärmeleitfähigkeit als für üblicherweise eingesetzte Stahlsorten. Ein solches vorgenanntes wärmeleitendes Material ist vorzugsweise Kupfer oder eine Kupferlegierung.

Ein erfindungsgemäßes Verfahren zur Entnahme eines Formeinsatzes aus einem erfindungsgemäßen Werkzeugelement ist gekennzeichnet durch die folgenden Schritte:
- I: Bedienung eines einzigen Betätigungsmittels, um den Formeneinsatz in eine Entriegelungsposition zu versetzen und
- II.: Entnahme des Formeinsatzes.

Vorteilhafte Ausgestaltungsvarianten des Verfahrens sind Gegenstand der Unteransprüche.

Bei Bedienung des Betätigungsmittels kann vorteilhaft eine Entriegelung des Formeinsatzes und einer mit dem Formeinsatz verbundenen Auswerfereinrichtung erfolgen.

Das Bedienen des Betätigungsmittels erfolgt vorzugsweise in geöffnetem Zustand eines Werkzeugs, welchem das Werkezugelement zugeordnet ist.

Vor der Bedienung nach Schritt I und in geöffnetem Zustand kann vorteilhaft ein lineares Verfahren der Auswerfereinrichtung in eine Bereitstellungsposition erfolgen.

Bei der Bedienung des Betätigungsmittels kann eine Hubbewegung des Formeinsatzes erfolgen derart, dass die Freigabe einer Grifffläche zur Entnahme des Formeinsatzes erfolgt.

Nachfolgend sind weitere vorteilhafte Ausgestaltungsvarianten der Erfindung aufgeführt.

Das Werkzeugelement kann vorzugsweise eine Werkzeughälfte eines Spritzgießwerkzeugs sein und insbesondere als die sogenannte Ausstoßerseite ausgebildet sein.

An der zweiten Baueinheit ist ein der ersten Baueinheit zugeordneter Formeinsatz zur Bildung des Formenhohlraums befestigt. Der Formenhohlraum ist zwar nicht zwangsweise Teil des Werkzeugelements, allerdings kann das Werkzeugelement in Zusammenwirkung mit einem zweiten Werkzeugelement, z.B. einer zweiten Werkzeughälfte, diesen Formenhohlraum ausbilden.

Die Auswerfereinrichtung dient dem Auswerfen von fertig gespritzten Kunststoffteilen kombiniert.

Dabei bilden zumindest der Formeinsatz und die Auswerfereinrichtung die erste Baueinheit. Zusätzliche Bauteile, so z.B. eine Trägerplatte, können ebenfalls Bestandteil der ersten Baueinheit sein.

Die Größe der ersten Baueinheit kann so gewählt werden, dass Eigengewicht per menschlicher Muskelkraft problemlos getragen werden kann. Somit ist keine zusätzliche maschinelle Hilfe zum Transport der Baueinheit notwendig um Wartungsarbeiten schnell und flexibel bei Produktionsunterbrechung zu tätigen. Das Eigengewicht sollte hier 25 kg, vorzugsweise jedoch sogar 8 kg, nicht überschreiten, um beispielsweise eine manuelle Entnahme zu gewährleisten.

Diese Beweglichkeit der ersten Baueinheit gegenüber der zweiten Baueinheit kann eingeschränkt sein. Dabei wird die Beweglichkeit in Stapelrichtung z.B. durch zumindest ein insbesondere parallel zur Stapelrichtung verlaufendes mechanisches Verbindungsmittel, wie eine Schraube, ein Bolzen oder eine Hülsen, begrenzt. Dieses mechanische Verbindungsmittel kann zumindest bereichsweise, z.B. der Schraubenkopf, innerhalb einer Ausnehmung des ersten und/oder zweiten Bauelements angeordnet sein. Zwischen dem mechanischen Verbindungsmittel und einer Wandung der Ausnehmung kann ein Ringspalt zur Beweglichkeit bzw. dem Spiel des mechanischen Verbindungsmittels ausgebildet sein. So kann schräg, vorzugsweise senkrecht, zur Stapelrichtung durch einen Spalt, beispielsweise den vorbeschriebenen Ringspalt, ein Bewegungsspiel vorgegeben werden, welches von durch das mechanische Verbindungsmittel und die Ausnehmung begrenzt wird.

Somit kann die erste Baueinheit schräg, insbesondere senkrecht, zur Stapelrichtung gegenüber der zweiten Baueinheit beweglich, vorzugsweise schwimmend, gelagert sein. Es kann allerdings auch eine Beweglichkeit in Stapelrichtung beweglich gelagert sein. Diese Beweglichkeit bezieht sich auf das Werkzeugelement im montierten Zustand, also wenn die erste und die zweite Baueinheit miteinander verbunden sind.

Ein Verbindungsmittel, z.B. ein Bolzen kann die Beweglichkeit in Stapelrichtung, also den Hub, beschränken. Somit besteht im vorliegenden Fall ein Formenschluss mit Bewegungsspiel zwischen der ersten und der zweiten Baueinheit.

Beim Schließen der Werkzeugelemente kann die erste Baueinheit durch eine oder mehrere Zentrierleisten vorzugsweise im Zusammenspiel mit einem Führungskanal mit der zweiten Baueinheit zentriert werden. Optional kann durch eines oder mehrere elastische Lagerelemente, wie z.B. eine Tellerfeder und/oder Dichtringe, die erste Baueinheit auch bei geöffnetem Werkzeug kraftschlüssig gegen Herabsenken, infolge des Eigengewichts oder anderer Kräfte, in zur zweiten Baueinheit zentrierter Lage gehalten werden. Elastische Lagerelemente sind somit Federelemente oder Elemente aus elastischem Material. Die Vorspannkraft in Stapelrichtung richtet sich insbesondere nach dem quer zur Stapelrichtung wirkendem Eigengewicht der ersten Baueinheit, aber auch nach den Reibkoeffizienten der Lagerelemente und den Kontaktflächen der jeweiligen Baueinheiten. Die Vorspannkraft ist so gewählt, dass eine zusätzliche Zentrierkraft quer zur Stapelrichtung die erste Baueinheit verschieben kann. Somit kann der Beweglichkeit des ersten Bauelements gegenüber dem zweiten Bauelement quer zur Stapelrichtung eine leicht überwindbare Rückstell- bzw. Zentrierkraft quer zur Stapelrichtung, vorzugsweise weniger als 100 N, besonders bevorzugt weniger als 10 N, entgegengesetzt werden. Entsprechend ist die Beweglichkeit in Stapelrichtung und schräg, insbesondere senkrecht, zur Stapelrichtung im Rahmen der vorliegenden Erfindung zu verstehen.

Die erste Baueinheit kann mit der beschränkten Beweglichkeit gegenüber der zweiten Baueinheit in einer Bewegungsrichtung schräg zur Stapelrichtung in zentrierter Lage durch Kraftschluss gehalten werden. Die beschränkte Beweglichkeit zwischen den Baueinheiten ist zumindest dann gegeben, wenn der Kraftschluss überwunden wird.

Ein solcher der Kraftschluss kann vorzugsweise durch zumindest eines oder mehrere elastische Haltemittel erreicht werden, die derart positioniert sind, dass gegen die relative Verschiebung des Formeinsatzes entgegen der Stapelrichtung eine Rückstellkraft wirkt. Diese Rückstellkraft kann auf den Formeinsatz direkt oder auch auf eine Trägerplatte wirken auf der der oder die Formeinsätze angeordnet ist. Das Haltemittel kann besonders bevorzugt zwischen der ersten Baueinheit und der zweiten Baueinheit positioniert sein.

Der Kraftschluss quer zur Stapelrichtung zur Zentrierung der Baueinheiten zueinander kann vorzugsweise mehr als 102 Prozent, vorzugsweise zwischen 110 und 150 Prozent, der Gewichtskraft der ersten Baueinheit entsprechen. Dies wären bei einer Gewichtskraft einer Baueinheit von 8 kg beispielsweise 86 N (Newton).

Durch die bewegliche Lagerung kann somit der Verschleiß der Zentrierungselemente, verringert werden, da durch die Beweglichkeit Kräfte und somit Spannungen und Oberflächenbelastungen reduziert werden. Sofern unterschiedliche Temperaturverteilungen in den Werkzeugelementen vorliegen, ergeben sich somit auch unterschiedliche Temperaturausdehnungen. Somit kann es dazu kommen, dass der Formeneinsatz oder die Formeneinsätze des ersten, erfindungsgemäßen Werkzeugelements mit den korrespondierenden Formeneinsätzen eines zweiten Werkzeugelements bei Bildung einer Kavität nicht zueinander fluchten. Insbesondere bei variothermen Prozessen oder z.B. bei kurzen Abkühlphasen bei Wartungsarbeiten ergeben sich zwangsläufig unterschiedliche Temperaturverteilungen und somit unterschiedliche Temperaturausdehnungen. Durch die Zentrierung und die Beweglichkeit der ersten Baueinheit, ggf. nach Überwindung der Rückstellkraft der elastischen Lagermittel, erfolgt ein Ausgleich der Temperaturausdehnungen. Des Weiteren erhöht das die Präzision beim Spritzgießen. Die Koaxialität innerhalb einer Kavität, gebildet durch die jeweiligen Einsätze der festen und beweglichen Werkzeugelemente wird durch den Ausgleich erhöht. Es liegen durch die Beweglichkeit keine Verspannungen vor.

Durch die Toleranzaufsummierung oder unbemerkte Herstellungsfehler kann es zudem, wie bei der unterschiedlichen thermischen Ausdehnung, zu einem Versatz der Formeinsätze des ersten und des zweiten Werkzeugelements kommen. Auch hier hilft die Art der beweglichen, insbesondere schwimmenden, Lagerung der Formeinsätze, insbesondere der ersten Baueinheit gegenüber der zweiten Baueinheit, schonend und präziser den oder die Formeneinsätze zumindest des ersten erfindungsgemäßen Werkzeugelements so zu positionieren, dass eine schonende und präzisiere Zentrierung gegenüber dem Formeneinsatz des zweiten Werkzeugelements erfolgt.

Das Werkzeugelement kann dabei sowohl als die Düsen- und/oder die Auswerferseite eines Spritzgusswerkzeuges ausgebildet sein.

Die optional-vorgesehene Trägerplatte erleichtert die Entnahme der Formsätze. Eine Einzelentnahme ist somit nicht notwendig. Die Formeneinsätze können verschieden oder zueinander identisch sein.

Es ist zudem von Vorteil, wenn der eine Formeinsatz oder die Mehrzahl an Formeinsätze vor dessen oder deren Fixierung in Stapelrichtung schwimmend auf der zweiten Baueinheit oder schwimmend auf der Trägerplatte angeordnet ist. Besonders bevorzugt sind alle Formeneinsätze schwimmend entweder auf der zweiten Baueinheit oder auf der dazwischen angeordneten Trägerplatte oder mehreren dazwischen angeordneten Trägerplatten angeordnet.

Für eine höhere Standfestigkeit ist die erste Baueinheit, insbesondere die Trägerplatte, vorteilhaft zumindest bereichsweise gehärtet. Dadurch wird der Verschleiß an der Kontaktfläche zwischen einer Zentrierleiste und der Trägerplatte verringert.

Auch die Trägerplatte selbst kann vor deren Fixierung in Stapelrichtung schwimmend auf der zweiten Baueinheit angeordnet sein. Dabei können optional der Formeneinsatz oder die Formeneinsätze und die Trägerplatte starr miteinander verbunden sein.

Die beiden Baueinheiten können Vorsprünge und Ausnehmungen aufweisen. Alternativ oder zusätzlich zu Vorsprüngen können auch Verbindungsmittel, z.B. Schrauben- oder Bolzenköpfe, zumindest teilweise aus den Baueinheiten hervorstehen und in Ausnehmungen hineinragen. Bei passgenauer Fassung zwischen den Ausnehmungen und den Vorsprüngen oder Verbindungsmitteln würden die Anschlagseiten, insbesondere die randseitigen Anschlagseiten, der jeweiligen Ausnehmung und des Vorsprungs oder des Verbindungsmittels aneinander anliegen. Diese Anschlagseiten würden die Beweglichkeit senkrecht zur Stapelrichtung behindern. Dies ist in der vorliegenden Erfindung nicht der Fall, sondern es ist ein Bewegungsspiel zwischen den Verbindungsmitteln und/oder Vorsprüngen und den Ausnehmungen beider Baueinheiten vorhanden, so dass die erste Baueinheit gesamtheitlich gegenüber der zweiten Baueinheit ein Bewegungsspiel zumindest quer bzw. schräg, vorzugsweise senkrecht oder im Wesentlichen senkrecht, zur Stapelrichtung aufweist.

In Stapelrichtung oder parallel dazu kann die Beweglichkeit zwischen der ersten und der zweiten Baueinheit vorteilhaft durch ein mechanisches Verbindungsmittel, z.B. durch einen Bolzen mit Kopf, behindert sein. Dieses Verbindungsmittel verbindet die erste mit der zweiten Baueinheit. Die Verbindung wird vorzugsweise durch Formenschluss in Kombination mit einem einzigen mechanischen Verbindungsmittel, nämlich dem vorgenannten mechanischen Verbindungsmittel, geschaffen. Weitere Verbindungsmittel zum Verbindung der ersten Baueinheit mit der zweiten Baueinheit, wie z.B. Riegelmechanismen können vorgesehen sein. Diese werden jedoch im Rahmen der vorliegenden Erfindung nicht als mechanische Verbindungsmittel verstanden. Mechanische Verbindungsmittel sind vorzugsweise Schrauben, Schraubbolzen, Nieten, Gewindestangen und dergleichen.

In einer bevorzugten Ausgestaltungsvariante kann zwischen dem Bolzen des mechanischen Verbindungsmittels, insbesondere der Kopfauflage des Bolzens, und einer Fläche der ersten Baueinheit zumindest bereichsweise ein Spalt bzw. eine Spielpassung angeordnet sein. Das elastische Lagermittel oder die elastischen Lagermittel zwischen der ersten und der zweiten Baueinheit bewirken aufgrund einer Rückstellkraft einen Druck der ersten Baueinheit gegen die zweite Baueinheit, welche überwindbar ist. Die Kopfauflage des Bolzens zwischen der ersten, der zweiten Baueinheit und des Bolzens unterliegt somit einen Kraftschluss, wobei die Bewegung schräg zur Stapelrichtung bei Überwindung des Kraftschlusses aufgrund des Spaltes möglich ist.

Die Trägerplatte kann bevorzugt Teil der ersten Baueinheit sein und der Formeinsatz kann an einer Oberseite an der Trägerplatte angeordnet sein. Die Auswerfereinrichtung kann vorteilhaft an einer Unterseite an der Trägerplatte angeordnet sein.

Die Bewegung des Verriegelungsmechanismus kann durch eine Sperrvorrichtung behindert werden. Erst nach Lösen der Sperrvorrichtung kann der Verriegelungsmechanismus aktiviert werden. Dies sorgt für eine zusätzliche Sicherung gegen ungewolltes Verriegeln oder Entriegeln. Optional kann dies durch zumindest ein sogenanntes Rastmittel erreicht werden. Dieses hält die Verriegelung durch Kraftschluss in Stellung. Zum Verriegeln bzw. Entriegeln muss eine definierte Kraft überwunden werden.

Die Trägerplatte kann Temperierkanäle zur Leitung von Temperiermittel zum Kühlen oder Erwärmen der Trägerplatte und der angrenzenden Elemente der ersten Baueinheit aufweisen, wobei sich die Temperierkanäle innerhalb der Trägerplatte von der zweiten Baueinheit zur Temperierung der Formeinsätze verzweigen. Durch die spritzgussformnahe Einbringung des Temperiermittels innerhalb der Trägerplatte kann eine intensivere und gleichmäßigere Temperierung im Bereich der Formeinsätze erreicht werden. Zykluszeiten und aus ungleichmäßiger Kühlung hervorgehender Verzug der hergestellten Formteile kann reduziert werden. Der Temperiermittel-Verlauf in den Trägerplatten ist verglichen mit der Halteplatte nicht durch Durchbrüche für das auszuwechselnde Auswerferpaket beschränkt. Zudem können durch die so gewonnenen gestalterischen Freiheitsgrade bei der Ausgestaltung der ersten Baueinheit, die Temperierung einzelner Formeinsätze einfacher und weniger aufwendig ermöglicht werden. So kann z.B. die Anzahl an Verbindungsbohrungen aus der Halteplatte in Richtung der Formeinsätze entsprechend bemessen, bzw. reduziert werden. Die Begründung liegt darin, dass zum einen durch die geschaffene geometrische Freiheit, Verbindungsbohrungen zwischen Halteplatte und Einsätze an diversen Positionen festgelegt werden können. Des Weiteren kann durch die Trägerplatte eine Mehrzahl von Einsatz-Temperier-Verbindungsbohrungen, seriell oder parallel geschaltet, in kompakter Bauweise verbunden werden. Die Anzahl an geometrisch beschränkteren Verbindungsbohrungen von der Halteplatte lässt sich somit reduzieren, da eine Temperiermittelverteilung an eine Mehrzahl von Einsätzen, in der Trägerplatte erfolgen kann.

Optional kann ein jeder Formeneinsatz einen oder mehrere Formkerne aufweisen. Diese Formkerne können z.B. der besseren Wärmeableitung von Wärme aus der zu bildenden Kavität zwischen den beiden Werkzeugelementen dienen. Die Formenkerne bestehen dabei vorzugsweise aus einem besser wärmeleitenden Material als der restliche Formeneinsatz. So kann z.B. ein Kupferkern als Formenkern genutzt werden, während der Formenkern z.B. aus Stahl besteht.

Alternativ kann auch die Trägerplatte zumindest bereichsweise oder auch vollständig aus einem besser Wärme leitenden Material als Stahl, z.B. aus Kupfer, bestehen. Das führt zu einem gleichmäßigeren und stärkeren Wärmeaustausch. Dies ist insbesondere dann vorteilhaft, wenn die Trägerplatte viele Bohrungen für Auswerferstangen enthält. Diese Bereiche können zumeist nicht aktiv temperiert werden.

Durch die Handhabung mittels der Trägerplatte wird die Entnahme der Formeinsätze mit eingesetzten Formkernen sicherer. Die Formkerne werden mit der Halteplatte gehalten, insbesondere Formenkerne profitieren von der zusätzlichen Temperierung in der Trägerplatten, da die Temperierkanäle nahe an den Formenkernen in der Trägerplatte angeordnet werden können. Die Temperierung, insbesondere eine Kühlung, der Formenkerne ermöglicht einen kavitätsnahen Wärmeaustausch. Oft ist der Wärmeaustausch von Formeinsätzen bei Spritzgusswerkzeugen im Stand der Technik und der darin befindlichen Kerne durch deren Passung limitiert. Jede Passung wirkt wie ein zusätzlicher Isolator, da an den Grenzflächen ein schlechter Wärmeübergang besteht. Diese Passung und die damit einhergehende Isolierwirkung kann durch die zusätzliche und nahe Temperierung in der Trägerplatte kompensiert werden.

Die Auswerfereinrichtung bzw. Elemente der Auswerfereinrichtung können mittels eines Bolzens und einer Haltescheibe und/oder eines endständig, insbesondere stirnseitig, in den Bolzen festgelegten mechanischen Verbindungsmittel, vorzugsweise einem stift- oder bolzenförmigen Verbindungsmittels mit einem randseitigen Vorsprung, an dem Formeinsatz oder an der Trägerplatte lösbar festgelegt sein. Das Verbindungsmittel kann vorzugsweise eine Schraube sein und der randseitige Vorsprung ein Schraubenkopf. Der Vorsprung, insbesondere der Schraubenkopf, und/oder die Haltescheibe, bildet dabei einen Anschlag für das Auswerferpaket bzw. die Auswerfereinrichtung. Diese Halterung der Auswerfereinrichtung zeichnet sich dadurch aus, dass eine einfache partielle und schonende Demontage von Auswerferstangen der Auswerfereinrichtung ermöglicht wird. Hierzu kann nach Entnahme der Haltescheiben eines oder mehrere plattenförmige Bauteile entnommen werden um einzelne Auswerferstangen auszutauschen und zu warten bzw. zu überprüfen. Hierbei tragen auf Grund des Bolzens nicht mehr die filigranen Auswerferstangen das Gewicht einer Auswerferhalteplatte der Auswerfereinrichtung bei der Demontage sondern der Bolzen, so dass beim Lösen dieser beiden Elemente eine Demontage von Elementen der Auswerfereinrichtung beim Ausführen entlang des Bolzens und endständig über den Bolzen hinaus erfolgen kann. Die Haltescheibe kann dabei vorteilhaft die Auflagefläche des Schraubenkopfes der Schraube vergrößern. Der Bolzen weist dabei zumindest den dreifachen Durchmesser, vorzugsweise den zehnfachen Durchmesser, einer Auswerferstange auf.

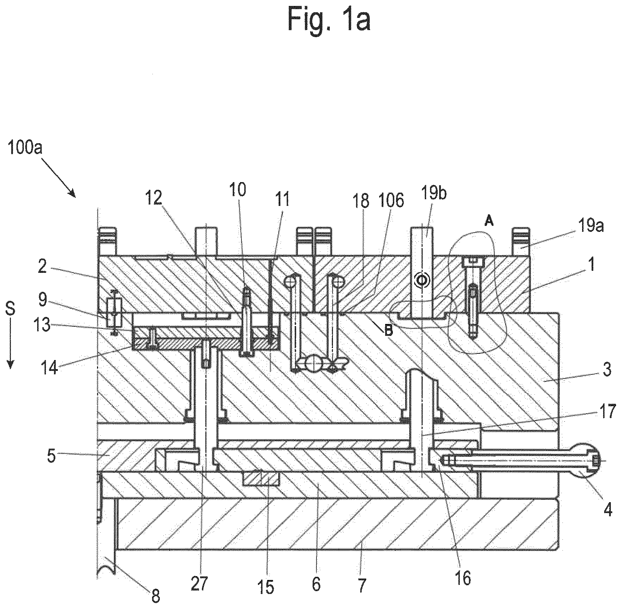

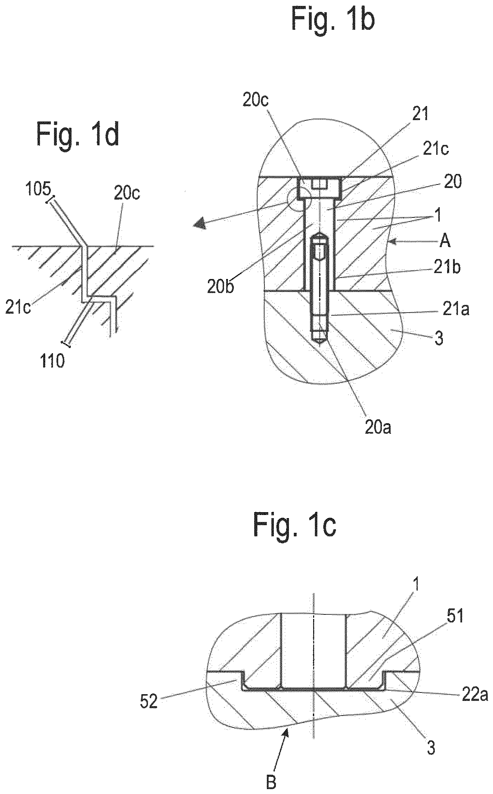

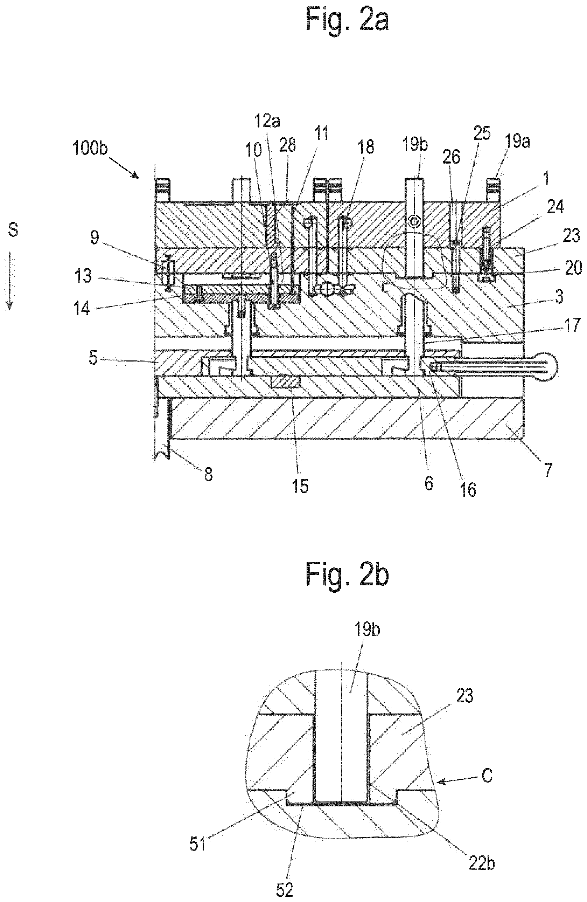

Der Einsatz des Bolzens zur Führung und Halterung der Auswerfereinrichtung ermöglicht eine Reduzierung der Wartezeit dessen Demontage. Bei Verwendung einer Schulterpassschraube hingegen, muss zum Warten einzelner Auswerferstangen das gesamte auswechselbare Auswerfer-Paket zum Schutz gegen Verformungen der Auswerferstangen zunächst entnommen werden. Denn eine reine Demontage einer Auswerferstange ist aufgrund des Eigengewichts der Auswerferhalteplatte nicht ratsam, da sonst die restlich verbliebenen filigranen Auswerferstangen das Gewicht tragen. Daher würde in diesem Fall das gesamte Auswerpakt gesamtheitlich demontiert und separat zur weiteren Wartung zerlegt. Dies bedeutet bei einer erneuten Montage müssten alle im Auswerferpaket enthaltenen Auswerferstangen einzeln und anfällig für Beschädigungen in jeweils vorgesehene filigrane Bohrungen in der Halteplatte und Einsatz eingesetzt werden. Hierbei würde die Halteplatte dann durch die Auswerferstangen ausgerichtet. Erst danach erfolgt die Anbringung der Halteplatte. Die Fixierung und Führung des Auswerferpakets ergäbe sich darauf mittels Montage der Schulterpasschraube. Dieser Vorgang, welcher u.a. bei der Ausführungsvariante der nachfolgenden Fig. 1, angewandt wird kann bei der Konstruktion der nachfolgenden Fig. 2 bis 12 vorteilhaft vermieden werden. Die in Fig. 2-12 dargestellte Variante kann sich als schonender für die Auswerferstangen und die Führungsbohrungen in den Einsätzen erweisen. Durch die Verwendung des Bolzens, welcher vorzugsweise als zylindrischer Bolzen ausgebildet ist, mit einer stirnseitig-endständigen Schraube und ggf. der Haltescheibe anstelle einer Schulterpassschraube sind Wartungsarbeiten schonender und schneller durchführbar. Insbesondere bei Verwendung mehrerer Auswechselpakete hat sich diese Konstruktion als vorteilhaft erwiesen.

Die erste Baueinheit kann dezentral lösbar an der zweiten Baueinheit, insbesondere an einer ersten Halteplatte dieser zweiten Baueinheit, des Werkzeugelements angeordnet sein. Vorzugsweise kann hierzu sowohl ein Ausstoßerbolzen als auch ein Betätigungselement in eine Entriegelungsstellung, insbesondere nacheinander in eine Entriegelungsstellung, gebracht werden müssen. Dadurch wird eine Sicherung vor einem ungewollten Lösen der Baueinheiten erreicht.

Der Formeinsatz und die Auswerfereinrichtung können vorteilhaft insbesondere durch Lösen des mechanischen Verbindungsmittels, insbesondere der Schraube, aus dem Bolzen und/oder durch Lösen der Haltescheibe vom Bolzen voneinander lösbar sein. Weitere mechanische Verbindungsmittel müssen zur Demontage der beiden vorgenannten Bauteile vorteilhaft nicht zusätzlich gelöst werden.

Die erste Baueinheit, vorzugsweise die Auswerfereinrichtung der ersten Baueinheit, kann einen Führungsbolzen aufweisen. Die zweite Baueinheit kann, insbesondere in Entriegelungsstellung der Verriegelungsmechanismus, eine zum Führungsbolzen korrespondierende Aufnahme aufweisen. Der Führungsbolzen kann mit der zweiten Baueinheit des Werkzeugelements verriegelt werden. Dies kann vorteilhaft durch Einstellen des Verriegelungsmechanismus in einer Verriegelungsposition erfolgen. Als Verriegelungsmechanismus bzw. Verriegelungseinrichtung kann eine in der zweiten Baueinheit beweglich angeordnete Verriegelungsleiste vorgesehen sein. Diese zweite Baueinheit kann vorzugsweise eine erste Halteplatte aufweisen mit Öffungen zur Durchführung von einzelnen Bolzen oder Stangen aufweisen.

Während die erste Baueinheit auf einer Oberseite der zweiten Baueinheit aufliegt kann die Verriegelungsleiste auf einer Unterseite dieser zweiten Baueinheit angeordnet sein.

Die Verriegelungsleiste kann quer zum Führungsbolzen beweglich angeordnet sein.

Die Verriegelungsleiste kann ein Betätigungselement, welches vorzugsweise als ein Handgriff ausgebildet ist, aufweisen.

Der Formeinsatz, vorzugsweise eine Mehrzahl an Formeinsätzen, des Werkzeugelements können vorzugsweise rahmenlos auf einer ersten Halteplatte des Werkzeugelements oder einer auf der ersten Halteplatte angeordneten Trägerplatte des Werkzeugelements angeordnet sein. Insbesondere bei einer massiven Ausgestaltung des Werkzeugelements ist eine hinreichende Abstützung des Formeinsatzes gewährleistet ohne dass ein Rahmen zur Führung und Stützung notwendig ist. Weiterhin wird durch die rahmenlose Ausgestaltung die Fertigung vereinfacht und der Freiheitsgrad für die Anordnung der Formeinsätze auf der Halteplatte oder Trägerplatte im Rahmen der Konstruktionsplanung wird zugleich größer.

Die Halteplatte kann vorzugsweise und vorteilhaft eine Ausnehmung zur Aufnahme und/oder Durchführung der Auswerfereinrichtung aufweisen. Besonders bevorzugt beträgt die randseitige Beabstandung des Formeinsatzes in der Halteplatte allseitig weniger als weniger als 3,5 mm, vorzugsweise weniger als 1 mm.

Die Auswerfereinrichtung kann sich bei dessen Anordnung in einer Ausnehmung einer ersten Halteplatte des Werkzeugelements zur Aufnahme der Auswerfereinrichtung auf dieser ersten Halteplatte des Werkzeugelements abstützen.

Mehrere erste Baueinheiten, insbesondere zumindest sechs, besonders bevorzugt zumindest acht erste Baueinheiten, können über einen einzigen Verriegelungsmechanismus lösbar angeordnet sind. Insbesondere können mehrere Formeinheiten durch Betätigung eines einzigen mechanischen Lösungsmittels gelöst werden. Ein mechanisches Lösungsmittel ist vorzugsweise eine Schraube, ein Gewindebolzen, ein Riegel oder dergleichen sein. Die ersten Baueinheiten sind dabei baugleich.

Mehrere Formeinheiten müssen im Kontext der vorliegenden Erfindung nicht sämtliche Formeinheiten der Baueinheit sein, es kann sich z.B. um eine Einheit von drei Formeinheiten von insgesamt zwölf Formeinheiten handeln.

Bevorzugt kann auch jedem Formeinsatz jeweils eine Trägerplatte zugeordnet.

Eine Steckverbindung und/oder ein Sensor können vorgesehen sein zum Überwachen des Kontaktes der ersten Baueinheit und der zweiten Baueinheit.

Eine Trägerplatte kann zudem Temperierkanäle zur Leitung von Temperiermittel aufweisen, wobei sich die Temperierkanäle innerhalb der Trägerplatte von der zweiten Baueinheit zur Kühlung der Formeinsätze verzweigen.

Ein erfindungsgemäßes Werkzeug kann mit zwei auseinanderfahrbaren sowie zusammenfahrbaren Werkzeugelementen, insbesondere Werkzeughälften, versehen sein, wobei im geschlossenen Zustand zwischen den beiden Werkzeugelementen wenigstens ein Formenhohlraum ausgebildet ist und wobei zumindest ein Werkzeugelement als ein erfindungsgemäßes Werkzeugelement ausgebildet ist.

Das Bedienen des Betätigungsmittels kann in geöffnetem Zustand eines Werkzeugs erfolgen, welchem das Werkzeugelement zugeordnet ist.

Vor der Bedienung nach Schritt I und in geöffnetem Zustand kann ein lineares Verfahren der Auswerfereinrichtung in eine Bereitstellungsposition erfolgen.

Bei der Bedienung des Betätigungsmittels kann eine Hubbewegung des Formeinsatzes erfolgen derart, dass die Freigabe einer Grifffläche zur Entnahme des Formeinsatzes erfolgt.

Ein erfindungsgemäßes Werkzeug weist zwei auseinanderfahrbare sowie zusammenfahrbare Werkzeugelemente, insbesondere Werkzeughälften, auf, wobei im geschlossenen Zustand zwischen den beiden Werkzeugelementen wenigstens ein Formenhohlraum ausgebildet ist und wobei zumindest ein Werkzeugelement als ein erfindungsgemäßes Werkzeugelement ausgebildet ist.

Nachfolgend wird die Erfindung im Detail anhand eines Ausführungsbeispiels und unter Zuhilfenahme der nachfolgenden Figuren näher erläutert. Es zeigen:
- Fig. 1a: eine Schnittdarstellung einer nicht-erfindungsgemäßen Werkzeughälfte eines ersten Ausführungsbeispiels eines erfindungsgemäßen Werkzeugs zum Spritzgießen von Kunststoffteilen im verriegelten Zustand;
- Fig 1b: eine vergrößerte Detailansicht des Bereichs A der Fig. 1a;
- Fig. 1c: eine vergrößerte Detailansicht des Bereichs B der Fig. 1a;
- Fig. 1d: eine vergrößerte Detailansicht der Fig. 1b;
- Fig. 2a: eine Schnittdarstellung einer Werkzeughälfte eines zweiten Ausführungsbeispiels eines nicht-erfindungsgemäßen Werkzeugs zum Spritzgießen von Kunststoffteilen im verriegelten Zustand;
- Fig. 2b: eine vergrößerte Detailansicht des Bereichs C der Fig. 2a;
- Fig. 3: eine Schnittdarstellung der Werkzeughälfte der Fig. 2a bei betätigtem Entriegelungsmechanismus;
- Fig. 4: eine Schnittdarstellung der Werkzeughälfte der Fig. 2a und 3a im teilweise demontierten Zustand;
- Fig. 5: eine Schnittdarstellung einer dritten Variante eines nichterfindungsgemäßen Werkzeugs als modifizierte Variante der Werkzeughälfte in Fig. 2a bis 4
- Fig. 6: eine Schnittdarstellung einer vierten Variante eines erfindungsgemäßen Werkzeugs als modifizierte Variante der Werkzeughälfte in Fig. 5;
- Fig. 7: eine Schnittdarstellung einer Werkzeughälfte einer weiteren Ausführungsbeispiels eines erfindungsgemäßen Werkzeugs zum Spritzgießen von Kunststoffteilen;
- Fig. 8: eine Darstellung der Entriegelungsvorgänge der Werkzeughälfte der Fig. 7;
- Fig. 9: eine Schnittdarstellung einer nicht-erfindungsgemäßen Werkzeughälfte im entriegelten und getrennten Zustand mit einer ersten und einer zweiten Baueinheit;
- Fig. 10: eine Schnittdarstellung der ersten Baueinheit der Fig. 7 oder 8 mit demontierter Auswerfereinrichtung;
- Fig. 11: eine Realisierung der erfindungsgemäßen Werkzeughälfte der Fig. 7-8 mit einer Doppel-Auswerfereinrichtung;
- Fig. 12: eine Realisierung der erfindungsgemäßen Werkzeughälfte mit zwei Auswerfereinrichtungen, einem sogenannten Wechselauswerferpaket und einem Stammauswerferpaket;
- Fig. 13: ein erfindungsgemäßes Werkzeug umfassend zwei erfindungsgemäßen Werkzeugelemente, die als Spritzguss-Werkzeughälften ausgebildet sind in der Perspektivansicht;
- Fig. 14: Schnittebene A-A des Werkzeugs der Fig. 13;
- Fig.15: Schnittebene B-B/C-C des Werkzeugs der Fig. 13 senkrecht zur Schnittebene A-A;
- Fig. 16: Detaildarstellung eines ersten Riegelmechanismus des Werkzeugs der Fig. 13-15 in der Explosionsansicht mit einem Formeinsatz;
- Fig. 17: Detaildarstellung des Riegelmechanismus der Fig. 16 mit integriertem Formeinsatz;
- Fig. 18: Werkzeugelemente des erfindungsgemäßen Werkzeugs der Fig. 13 im geöffneten Zustand F1;
- Fig. 19: Werkzeugelemente des erfindungsgemäßen Werkzeugs der Fig. 18 Zustand F2 in Öffnungsstellung und mit vorgefahrenem Auswerferpaket in Schnittebene A-A;
- Fig. 20: Schnittebene B-B, C-C der Werkzeugelemente der Fig. 19 im Zustand F2 (geöffnet + vorgefahrenes Auswerferpaket)
- Fig. 21: Perspektivansicht der Auswerferseite der beiden Werkzeughälften im entriegelten Zustand F3 mit angehobenem Formeinsatz;
- Fig. 22: Perspektivansicht der Düsenseite der beiden Werkzeughälften mit angehobenem Formeinsatz im entriegelten Zustand F3;
- Fig. 23: Schnittansicht entlang der Schnittebenen B-B, C-C der Werkzeugelemente der Fig. 21 und 22 im entriegelten Zustand F3;
- Fig. 24: Perspektivansicht der Düsenseite der beiden Werkzeughälften mit entnommenem Formeinsatz im Zustand F4;
- Fig. 25: Perspektivansicht der Auswerferseite der beiden Werkzeughälften mit entnommenem Formeinsatz und Auswerferpaket im Zustand F4; und
- Fig. 26: Schnittansicht der beiden Werkzeughälften der Fig. 24 und 25.

Spritzgusswerkzeuge können mehrteilig hergestellt werden. Dabei unterscheidet man zumeist zwischen zwei Werkzeughälften, der sogenannten Auswerferseite und die Düsenseite. Nach erfolgtem Spritzguss und Erstarren des spritzgegossenen Formteils werden diese beiden Werkzeughälften auseinandergefahren. Das Formteil verbleibt in der Regel jedoch auf der Auswerferseite bis es durch eine Auswerfervorrichtung von der Auswerferseite getrennt wird.

Derartige Vorrichtungen werden bereits seit vielen Jahren realisiert. Zum Verständnis einzelner Bauteil eines Werkzeuges der Spritzgusstechnik wird auf das Fachbuch Mink, Walter, Grundzüge der Spritzgießtechnik, 5.Auflage, 1979, insbesondere S.539 bis 542, Zechner & Hünthig Verlag Speyer*,* verwiesen, auf welches im Rahmen der vorliegenden Erfindung vollumfänglich Bezug genommen wird.

Fig. 1a zeigt eine erste Variante einer Werkzeughälfte 100a als Auswerferseite eines erfindungsgemäßen Werkzeugs. Die Düsenseite ist aus Gründen der Übersichtlichkeit nicht dargestellt.

Die Werkzeughälfte 100a weist zwei Formeneinsätze 1 und 2 auf. Diese Formeneinsätze sind zumeist aus Metall und/oder Keramik gefertigt. In Fig. 1a ist der Formeneinsatz 2 ist zum Formeneinsatz 1 identisch, er weist allerdings einen anderen Schnittverlauf auf.

Der Formeinsatz 1 oder die Formeinsätze 1, 2 verbleiben bei den in den Figuren dargestellten Varianten im Werkzeug. Die nachfolgend beschriebene vereinfachte Wechselung der Baueinheiten und der Formeneinsätze zielt auf eine bessere Wartung ab. Dabei soll eine erste Baueinheit 61 mit den Formeinsätzen 1, 2 bequem von einer zweiten Baueinheit 62 getrennt und ggf. ausgetauscht werden.

Fig. 1a weist zwei Formeinsätze 1, 2 auf. Diese sind an einer ersten Halteplatte 3 der Werkzeughälfte 100a befestigt. Der jeweilige Formeinsatz 1 oder 2 verfügt über eine Stirnseite, welche gemeinsam mit der nicht dargestellten zweiten Werkzeughälfte, also der Düsenseite, einen Hohlraum für den Spritzgießling definiert. Die Befestigung des Formeinsatzes 1 oder 2 an der ersten Halteplatte 3 erfolgt bevorzugt mittels zumindest eines lösbaren mechanischen Verbindungsmittels 20. Als mechanische Verbindungsmittel sind Schrauben und ggf. Muttern, sowie Stifte und/oder Bolzen zu verstehen. Diese können beispielsweise als Schraub- und/oder Bajonettverschluss ausgebildet sein. Das mechanische Verbindungsmittel 20 kann vorzugsweise als Abstandsbolzen ausgebildet sein und ist ebenfalls bevorzugt von der Außenseite zumindest eines Form 1 oder 2 lösbar. Hierfür weist der erste Formeinsatz 1 eine Bohrung 21 zur Führung des mechanischen Verbindungsmittels 20 auf. Die Bohrung 21 weist einen Gewindelochsegment 21a in der Halteplatte 3, ein zylindrisches Bohrkanal 21b und endständig im Bereich des Bohrkanals 21b eine Ausnehmung 21c zur Aufnahme eines randseitigen Vorsprungs des mechanischen Verbindungsmittels 20 auf. Dieses mechanische Verbindungsmittel ist in Fig. 1-12 als Abstandsbolzen vorteilhaft mit einem endständigen Gewindestift 20 a, einem Bolzenabschnitt 20b, vorzugsweise mit zylindrischer Mantelfläche, und einem Schraubenkopf 20c. Der Gewindestift 20a dient dem Eingriff des Verbindungsmittels in das Gewindelochsegment der Halteplatte 3, wie dies in Fig. 1 dargestellt ist. Der Bolzenabschnitt 20b kann aufgrund seiner Länge einen Bewegungsbereichs 110 parallel zur Stapelrichtung S vorgeben. Er ist im Bohrloch 21b angeordnet ist weist ein Bewegungsspiel zur Bohrlochwandung auf. Der Bewegungsbereich 110 ist bei Einsatz eines elastischen Lagermittels z.B. einer Tellerfeder oder eines Gummirings zwischen dem Formeneinsatz 2 und der Halteplatte 3 in einer dafür vorgesehenen Aussparung 106 der Halteplatte 3 nicht vorhanden, sondern es ergibt sich aufgrund der Rückstellkräfte des Lagermittels ein Kraftschluss zwischen der Ausnehmung 21c mit dem Schraubenkopf 20c oder einem anderen am mechanischen Verbindungsmittel 20 vorgesehenen Vorsprung, welcher z.B. durch einen Haltering gebildet sein kann. Der Schraubenkopf 20c bzw. der Vorsprung sitzt in diesem Fall auf einer Anschlagfläche der Ausnehmung 21c auf. Allerdings kann durch eine Kraft in Stapelrichtung S auf den Formeinsatz 2 dieser Kraftschluss aufgehoben werden so dass der Formeinsatz 2 parallel zur Stapelrichtung aber auch schräg, insbesondere senkrecht zur Stapelrichtung, ein Bewegungsspiel aufweist. Seitlich weist der Vorsprung, insbesondere der Schraubenkopf 20c, eine Beabstandung, vorzugsweise einen Ringspalt 105 zur Wandung der Ausnehmung 21c auf, so dass ein begrenztes Verschieben des Formeinsatzes 2 schräg, insbesondere senkrecht, zur Stapelrichtung S gegenüber der Halteplatte 3 an dieser Stelle möglich ist.

Zumindest ein Formeinsatz 1, 2 oder eine Trägerplatte 23 weist zudem eine elektrische Steckverbindung 9 mit der Halteplatte 3 auf zur Übertragung von Signalen und/oder zur Stromversorgung. Hierfür kann ein Steckergehäuse der Steckverbindung 9, vorzugsweise das Steckergehäuse eines Steckers oder einer Steckbuchse, beweglich, insbesondere schwimmend, zumindest auf dem ersten und/oder dem zweiten Bauelement gelagert sein. Es ist auch möglich dass ein Zentrierungsstift zur Führung des Steckers in die Steckbuchse vorgesehen ist.

Die Werkzeughälfte 100a weist zumindest eine, vorzugsweise mehrere Zentrierleisten 19a, 19b, auf. Diese stehen aus einer der Halteplatte 3 gegenüberliegenden, freiliegenden Stirnseite heraus. Sowohl der Formeinsatz 1 als auch die erste Halteplatte 3 weist Temperierkanäle auf zur Leitung eines Temperiermittels, beispielsweise von Wasser. Die Temperierkanäle des Formeinsatzes 1 und der Halteplatte 3 bilden im zusammengesetzten Zustand eine Temperierleitung 18 auf. Zwischen der ersten Halteplatte 3 und dem Formeinsatz 1 ist eine Auswerfereinrichtung angeordnet. Die Auswerfereinrichtung weist eine Auswerfergrundplatte 14 und eine Auswerferhalteplatte 13 auf. Die Auswerfereinrichtung bildet gemeinsam mit dem jeweilig angrenzenden Formensatz 1 oder 2 eine erste Baueinheit.

Die erste Baueinheit aus Auswerfereinrichtung und Formeinsatz 2 ist durch eine oder mehrere mechanische Verbindungsmittel verbunden. Im vorliegenden Fall ist dies eine Schulterpassschraube 10, welche eine Führungsbuchse 12a festlegt. Die Führungsbuchse dient der Führung des Auswerferpakets bzw. der Auswerfereinrichtung bei dessen Relativbewegung gegenüber dem jeweiligen Formeinsatz 1 oder 2. Eine oder mehrere Auswerferstangen 11 sind in der Auswerfereinrichtung festgelegt und im Formeinsatz 1 oder 2 geführt.

Die Werkzeughälfte weist neben der Halteplatte 3 und dem zumindest einen Formeneinsatz 1 oder 2 auch eine zweite Halteplatte 5, die sogenannte Stamm-Auswerferahlteplatte, auf. Diese weist zumindest eine Öffnung zur Durchführung von zumindest einen als Riegelbolzen ausgebildeten Führungsbolzen 17 auf, welcher Teil einer Verriegelungsmechanismus ist. Dieser oder diese Riegelbolzen 17 sind Teil der Auswerfereinrichtung und stehen aus einer Stirnfläche der Auswerfergrundplatte 14 hervor. Diese Stirnfläche liegt optional bereichsweise auf der ersten Halteplatte 3 auf. Die erste Halteplatte 3 weist zudem eine Führungshülse zur Durchführung des Riegelbolzens 17 durch die erste Halteplatte 3.

Der Riegelbolzen 17 weist einen endständigen Kopf mit einem Vorsprung auf, welcher in formschlüssigen Eingriff mit einem Verriegelungsmechanismus gebracht werden kann. Benachbart zur zweiten Halteplatte 5 weist die Werkzeughälfte 100a Verriegelungsmittel 16 auf, welches beispielsweise stabförmig ausgebildet sein kann und kann linear beweglich in einem Führungskanal 41 angeordnet sein. Das Verriegelungsmittel 16 weist zumindest einen Vorsprung 32 auf, welcher mit dem Vorsprung des Riegelbolzens in Eingriff, vorzugsweise in formschlüssigen Eingriff, gebracht werden kann. Dadurch wird eine Verriegelung des Halteelements 5 und der ersten Baueinheit aus Auswerfereinrichtung und Formeneinsatz 2 mit der zweiten Halteplatte 5 und dem Verriegelungsmittel 16 erreicht. Die zweite Halteplatte 5, also die Stamm-Auswerferhalteplatte, und eine Druckplatte 6, die sogenannte Stamm-Auswerferdruckplatte, bilden eine Einheit. Bevorzugt ist die zweite Halteplatte 5 zumindest bereichsweise benachbart zur Druckplatte 6 und diese ist zumindest bereichsweise benachbart zu einer Aufspannplatte 7. Die erste Halteplatte 3, die zweite Halteplatte 5, die Druckplatte 6 und die Aufspannplatte 7 können bevorzugt eine zweite Baueinheit 62, die sogenannte Stamm-Baueinheit, bilden. Die Druckplatte 6 weist bevorzugt Verbindungsmittel, insbesondere Rastmittel 15, auf zur Verbindung mit dem Verriegelungsmittel. In einer Ausnehmung der Aufspannplatte 7 ist ein Ausstoßerbolzen 8 festgelegt.

Das Verriegelungsmittel 16 ist mit einem Betätigungselement 4 verbunden. Das Betätigungselement 4 kann beispielsweise als Handgriff ausgebildet sein. Durch Betätigung des Betätigungselements 4 erfolgt eine Entriegelung zwischen der ersten Baueinheit 61 und der zweiten Baueinheit 62. Zur Entnahme der ersten Baueinheit 61 müssen lediglich ein bzw. eine Mehrzahl von mechanischen Verbindungsmitteln 20 gelöst werden.

Der erste Formeinsatz 1 weist einen Vorsprung 51 auf, welcher in eine Aufnahme 52 in der ersten Halteplatte 3 eingreift.

Die Formeneinsätze 1 und/oder 2, die erste Halteplatte, die zweite Halteplatte, die Druckplatte und die Aufspannplatte definieren eine Stapelrichtung S. Die Verbindung des Formeinsatzes 1 und/oder 2 und der ersten Halteplatte 3 weist zumindest bereichsweise erfindungsgemäß einen Spalt oder mehrere Spalten zwischen dem jeweiligen Formeneinsatz 1 und/oder 2 und der ersten Halteplatte 3 auf.

Der Vorsprung 51 kann als Zentrierleiste vorzugswiese länglich angeordnet sein. Entsprechend ist die Aufnahme 52 eine Zentriernut, z.B. eine längliche Zentriernut mit einer Erstreckungsrichtung senkrecht zur Stapelrichtung S.

Der Vorsprung 51 und die Aufnahme 52 weist bei konzentrischer Lage somit beidseitig einen Spalt 22a auf, welcher vorzugsweise parallel zu dem gegenüberliegenden verläuft. Der Spalt kann optional bei konzentrischer Lage auch als Ringspalt ausgeführt sein.

Auch das Verbindungsmittel 20 kann optional und bevorzugt gegenüber dem ersten Formeinsatz 1 einen Spalt, insbesondere einen Ringspalt 105, aufweisen.

Auch zwischen der Auswerfereinrichtung und der Aufnahme in der ersten Halteplatte 3 ist seitlich ein Spalt ausgebildet. Dieser Spalt muss größer sein als das Spaltmaß zwischen dem Vorsprung 51 und der Aufnahme 52.

In Fig. 1a sind somit die Formeinsätze 1 und 2 auf der ersten Halteplatte 3 durch das Verbindungsmittel 20 verbunden und schwimmend gelagert. Bei der schwimmenden Lagerung ebenso wie bei einer Lagerung auf einer schiefen Ebene ist aufgrund des vorgesehenen Spalts oder der vorgesehenen Spalte eine geringe Beweglichkeit bzw. ein Spiel bzw. eine Toleranz des Formeneinsatzes senkrecht und bevorzugt auch parallel zur Stapelrichtung S mit der ersten Halteplatte möglich. Über das elastische Lagermittel wird der Formeinsatz 1 oder 2 kraftschlüssig gehalten. Die elastischen Lagermittel sind in den Figuren nicht dargestellt, allerdings sind Ausformungen 110 zur Aufnahme der Lagermittel in der Halteplatte 3 vorgesehen. Im Bereich der Zentrierleisten erfolgt bei Überwindung des Kraftschlusses eine Zentrierung des Formeinsatzes 1 oder 2 gegenüber dem zweiten nicht-dargestellten Werkzeugelement. In dieser Ausführung dienen die Lagermittel vorteilhaft zusätzlich zur Abdichtung des Temperierkreislaufs 18

Im Gegensatz zu einer formschlüssigen Passung zwischen dem ersten und/oder zweiten Formeinsatz 1 und/oder 2 und der ersten Halteplatte 3 erlaubt der Spalt oder die Spalten einen Ausgleich von Temperaturausdehnungen und Toleranzketten.

Der oder die vorgenannten Spalten müssen nicht zwingend parallel zur Stapelrichtung S verlaufen. So ist es auch möglich dass einzelne Spalten einen schrägen Verlauf zur Stapelrichtung S verlaufen. Nichts desto trotz kann dieser Spalt oder können diese Spalten eine Beabstandung senkrecht zur Stapelrichtung S ermöglichen.

Wenn Temperaturschwankungen oder unterschiedliche Temperaturen in Bauteilen des Werkzeugelements vorhanden sind gibt es unterschiedliche Ausdehnungen und somit Versätze des erfindungsgemäßen ersten Werkzeugelements gegen einem zweiten Werkzeugelement eines Spritzgusswerkzeugs. So sind die Temperatur und die Temperaturverteilung in einem solchen Werkzeug nicht immer homogen.

Gerade beim Mehrkomponentenspritzgießen wird oftmals jede Komponente eines Spritzgussteils in einer separaten Kombination aus Formeinsätze geformt welche im erfindungsgemäßen ersten Werkzeugteil oder im zweiten Werkzeugteil vorgesehen sind. Diese Formeneinsätze werden auch Spritzstationen genannt. Das geformte Spritzgussteil einer ersten Kunststoffkomponente wird von einer ersten Spritzstation in eine zweite folgende Spritzstation eingelegt oder zusammen mit dem oder den Formeneinsätzen und dem Formenkern an die zweite Spritzstation übergeben. Das kann dann so sein, dass dann die Formeneinsätze des ersten erfindungsgemäßen Werkzeugelements mit unterschiedlichen Formeneinsätzen des zweiten Werkzeugelements bei beiden Spritzstationen kombiniert werden, um jeweils unterschiedliche Kavitäten an der ersten oder der zweiten Spritzstation zu bilden. Je nach gespritztem Kunststofftyp der jeweiligen Komponente sind dann unterschiedliche Prozesstemperaturen notwendig. Das bedeutet, dass die zu übergebenden Formeneinsätze oder die spritzgegossenen Formlinge des ersten erfindungsgemäßen Werkzeugelements die gleiche Temperatur aufweisen wie die Formeinsätze 1 oder 2 des ersten Werkzeugelements. Die Formeneinsätze bzw. der Formeneinsatz des zweiten Werkzeugelements hingegen haben oder hat eine unterschiedliche Temperatur und somit eine unterschiedliche Ausdehnung bezogen auf eine gemeinsam gebildete Kavität bzw. auf ein gemeinsames Werkzeugzentrum. Die Formeinsätze 1 und 2 des ersten Werkzeugelements müssen daher bei jedem Wechsel der Spritzstationen neu angepasst werden.

Die Formeinsätze verbleiben während des Betriebes des Werkzeugs im Werkzeugelement. Sie werden zumeist nur zu Wartungsarbeiten und zum Austausch gegen andere Formeinsätze demontiert.

Eine Beabstandung zwischen dem Formeinsatz 1 oder 2 und der ersten Halteplatte 3 parallel zur Stapelrichtung S ist nicht zwingend erforderlich.

Die Auswerferstangen 11, welche sehr filigran gestaltet sind können, können aufgrund der konstruktiven Ausgestaltung auch wesentlich kürzer ausgebildet sein, als dies bei vergleichbaren Konstruktionen im Stand der Technik üblich ist.

Fertigungstoleranzen bei der Herstellung des Werkzeuges können durch die Beabstandung besser ausgeglichen werden.

Die Beabstandung senkrecht, und vorzugsweise auch parallel, zur Stapelrichtung S kann in einer bevorzugten Ausführungsvariante zumindest 1µm betragen. Besonders bevorzugt beträgt die Beabstandung senkrecht zur Stapelrichtung S zwischen 3 µm und 1,2 mm.

Insgesamt ist es bevorzugt wenn alle Anschlagsflächen zwischen dem ersten und/oder zweiten Formeinsatz 1 oder 2 und daran festgelegten mechanischen Verbindungsmitteln oder Bauteilen, welche eine Bewegung des Formeneinsatzes 1 und/oder 2 bei dessen Auflage auf der ersten Halteplatte 3 senkrecht zur Stapelrichtung S begrenzt, von den korrespondierenden Anschlagsflächen der ersten Halteplatte 3 und daran festgelegten mechanischen Verbindungsmitteln 20 oder Bauteilen beabstandet sind. Dabei ist vorzugsweise die kleinste Beabstandung der Spalt bzw. Toleranz 22a, 22b, welche somit das Spiel und somit die Beweglichkeit der Lagerung definiert. Alle anderen Beabstandungen schräg und insbesondere senkrecht zur Stapelrichtung S der ersten Baueinheit zur zweiten Baueinheit fallen vorzugsweise größer aus. Somit lassen sich diese Flächen wegen der geringeren Anforderungen an Präzision einfacher und günstiger herstellen.

Die Auswerferstangen 11 haben dabei so viel Spiel bzw. Bewegungsraum in der Halteplatte 3 dass die Auswerfereinrichtung bzw. die Auswerferpakete sich nicht zwingend mitbewegen müssen. Die senkrecht zur Stapelrichtung S wirkende Passung zwischen den Auswerferstangen 11 und der Halteplatte 13 ist ebenfalls größer als der Spalt bzw. Toleranz 22, gewählt. Die Auswerferstangen 11 haben somit Bewegungsraum in den Halteplatten 3 und 13, und werden im jeweiligen Formeneinsatz 1 oder 2 geführt.

Die in Fig. 1a dargestellte schwimmende Lagerung muss nicht unmittelbar zwischen dem Formeinsatz 1 oder 2 und der ersten Halteplatte erfolgen. In Fig. 2a und 2b ist eine Werkzeughälfte 100 b mit einer Trägerplatte 23 zwischen dem jeweiligen ersten und/oder zweiten Formeinsatz 1 und/oder 2 vorgesehen. Diese Trägerplatte kann analog zu Fig. 1c in Fig. 2b einen Vorsprung 51 und eine Aufnahme 52, bzw. eine Ausnehmung, aufweisen. Im Unterschied zu Fig. 1c ist in Fig. 2b ein Spalt 22b zwischen der Zentrierleiste 19b und der Trägerplatte 23 angeordnet. Dieser Spalt 22b ermöglicht eine begrenzte Bewegung der Formeinsätze 1 und/oder 2 gegenüber der Trägerplatte 23 senkrecht zur Stapelrichtung S.

Die Formeinsätze 1, 2 liegen flach, insbesondere schwimmend, auf der Trägerplatte 23 auf. Die Trägerplatte ermöglicht einen Längenausdehnungsausgleich. Sie kann zusätzlich im Übergang zu ersten Halteplatte 3 einen oder mehrere Spalten aufweisen, so dass eine begrenzte Beweglichkeit bzw. eine gewisse Toleranz der Trägerplatte 23 senkrecht zur Stapelrichtung S auf der ersten Halteplatte 3 realisiert ist. Wichtig ist allerdings primär die bewegliche Lagerung der Formeinsätze 1 und 2 auf der Trägerplatte 23 (gemäß der Variante der Fig. 1b) oder auf der Halteplatte 3 (gemäß der Variante der Fig. 1a)

Die Auswerfereinrichtung in Fig. 2a ist analog zur Auswerfereinrichtung in Fig. 1a ausgebildet, allerdings nunmehr an der Trägerplatte 23 festgelegt.

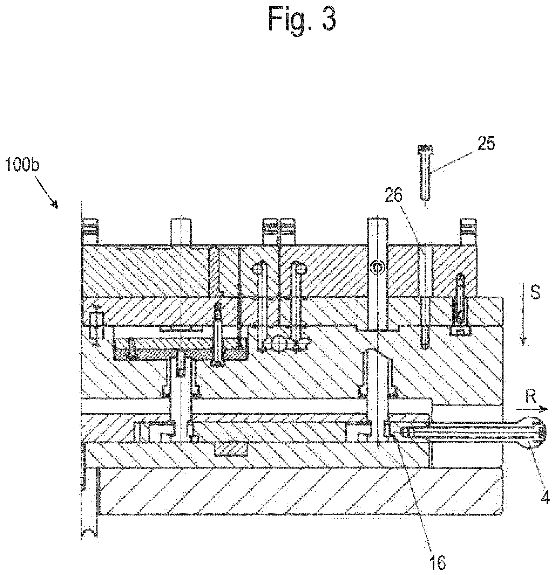

Ein mechanisches Verbindungselement 20 verbindet den ersten Formeinsatz 1 mit der Trägerplatte 23 kann allerdings in Stapelrichtung S ein gewisses Spiel bzw. einen Bewegungsraum zulassen. Der Aufbau und die Wirkweise des mechanischen Verbindungselements 20 wurden bereits zuvor mit Bezug auf Fig. 1 im Detail beschrieben. Diese Wirkweise ist in Fig.2 sowie in Fig. 3-6 analog zu verstehen. Allerdings ist die Anordnung des mechanischen Verbindungsmittels 20 sowie der Bohrung 21 gegenüber der Halteplatte 3 und dem Formeneinsatz 2 um 180 Grad gedreht. Die Bohrung 21 weist analog zu Fig. 1 ein Gewindesegment 21a, ein Bohrkanal 21b und eine Ausnehmung 21c auf. Allerdings ist das Gewindesegment im Formeinsatz 2 vorgesehen. Der Bohrkanal 21b ist in der Trägerplatte 23 angeordnet und die Ausnehmung 21c ist in der Halteplatte 3 angeordnet. Entsprechend ist das mechanische Verbindungsmittel auch in Fig. 2 als ein Abstandsbolzen mit einem Gewindestift 20a, einen Bolzenabschnitt 20b und einen Schraubenkopf 20c auf, wobei der Bolzenabschnitt 20b und der Schraubenkopf gegenüber der Wandung der Bohrung 21 ein Bewegungsspiel aufweist. Die Länge vom Bolzenabschnitt 20 b ist größer als die Plattenstärke der Halteplatte 23. Dadurch werden sie relativ zueinander bewegbar. Die Variante der Fig. 2 stellt somit eine mechanische Umkehr gegenüber der Variante der Fig. 1 dar.

Ein Schrauben- oder Bolzenkopf 20 c des Abstandsbolzens 20 steht dabei aus der Trägerplatte in Richtung der Halteplatte 3 hervor. Er bildet gemeinsam mit der Aufnahme 21c einen Ringspalt 105 aus.

Die Temperierleitung 18 erstreckt sich von den Formeinsätzen 1, 2, über die Trägerplatte 23 bis hin zur Halteplatte 3. Eine Schraube oder ein Steckbolzen 25 verbindet die Trägerplatte 23 mit der Halteplatte 3. Hierfür weist der erste Formeinsatz einen Führungskanal 26 auf.

Überdies weist der Formeneinsatz 2 einen sogenannten Formenkern 28 auf. Dieser dient zur Aufteilung des Formbereichs in mehrere Segmente. Die Trägerplatte 23 hält den Kern fest bei Montagearbeiten. Das Zusammenspiel aus Trägerplatte und vorteilhaft darin angeordnete Temperierkanäle erlaubt auch einen besseren Temperaturausgleich mit diesem Formenkern 28 und mit der im Werkzeug gebildeten Kavität insgesamt. Alle weiteren Bauteile sind identisch zur Fig. 1a ausgebildet.

Wie man in Fig. 2a erkennt, liegen die Formeinsätze 1 und 2 mit einer ebenen Fläche auf der Trägerplatte 23 auf. Diese wiederum hat gegenüber der ersten Halteplatte 3 ein gewisses Spiel bzw. eine Toleranz aufgrund der vorgesehenen Spalte im Bereich der Vorsprünge, der mechanischen Verbindungsmittel und/oder der weiteren Bauteile.

Fig. 3 zeigt das Entriegeln der Formeinsätze 1 und 2 und der Trägerplatte 23 der Werkzeughälfte 100 b der Fig. 2a durch Lösen der Schraube oder des Bolzens 25.

Darüber hinaus wird das Betätigungselement 4 und das damit verbundene Verriegelungsmittel 16 in Richtung R verschoben, so dass es zu einem Entriegeln des Kopfes des Riegelbolzens 17 kommt. In diesem Zustand erfolgt somit ein Außer-Eingriffbringen der ersten Baueinheit 61 aus Auswerfereinrichtung, Formeinsatz 1 und 2 und Trägerplatte 23 sowohl von der zweiten Baueinheit 62 mit der ersten Halteplatte 3, der zweiten Halteplatte 5, der Druckplatte 6 und der Aufspannplatte 7.

Analog kann auch eine Entriegelung der Formeinsätze 1 und 2 in der Ausführungsvariante der Fig. 1a erfolgen. Wobei hier anstatt des Bolzens 25 das mechanische Verbindungsmittel 20 gelöst werden muss.

Dabei kann der Ausstoßerbolzen 8 in oder entgegen der Stapelrichtung S verfahren werden. Vorzugsweise bei Betätigen dieses Ausstoßerbolzens kann die erste Baueinheit entnommen werden. Im Fall dass die Formeinsätze 1 und 2 nicht durch eine Trägerplatte 23 miteinander verbunden sind so können die Auswerfereinrichtungen zusammen mit den Formeinsätzen auch als einzelne Baueinheiten 61a und 61b verstanden werden, welche selbstverständlich nach der Entriegelung auch einzeln entnehmbar sind.

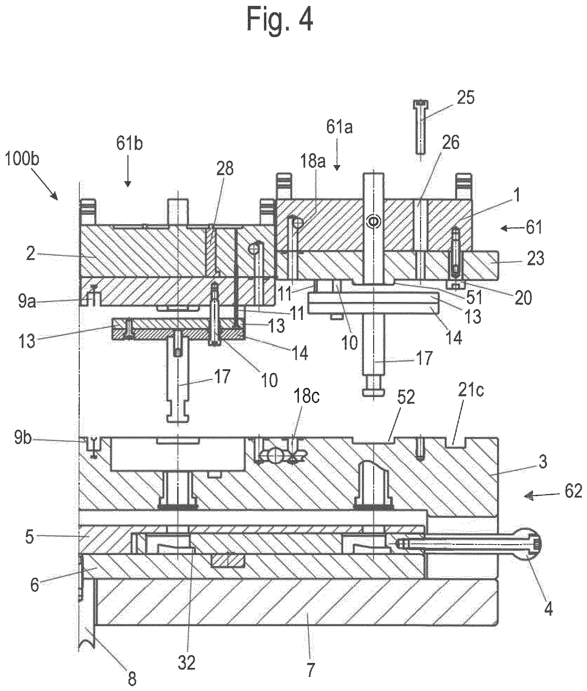

In Fig. 4 erkennt man die beiden getrennten Baueinheiten 61 und 62 im entriegelten Zustand. Man sieht zwei Öffnungen des Temperiermittelkanals 18c in der ersten Halteplatte und die korrespondierenden Temperiermittelkanäle 18a in der ersten Baueinheit 61. Die Trägerplatte weist einen Temperiermittelkanal 18b als Teil der Temperierleitung 18 auf, welcher sich innerhalb der Trägerplatte verzweigt.

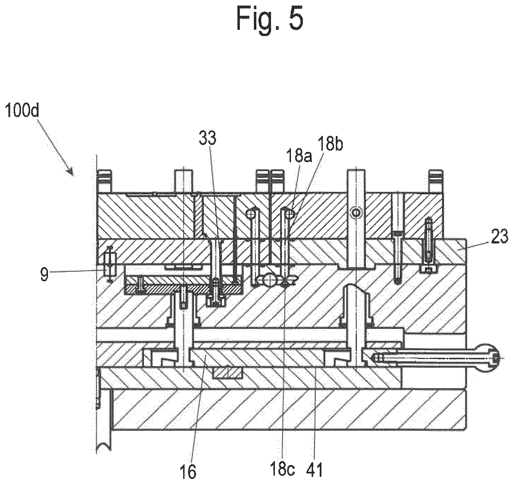

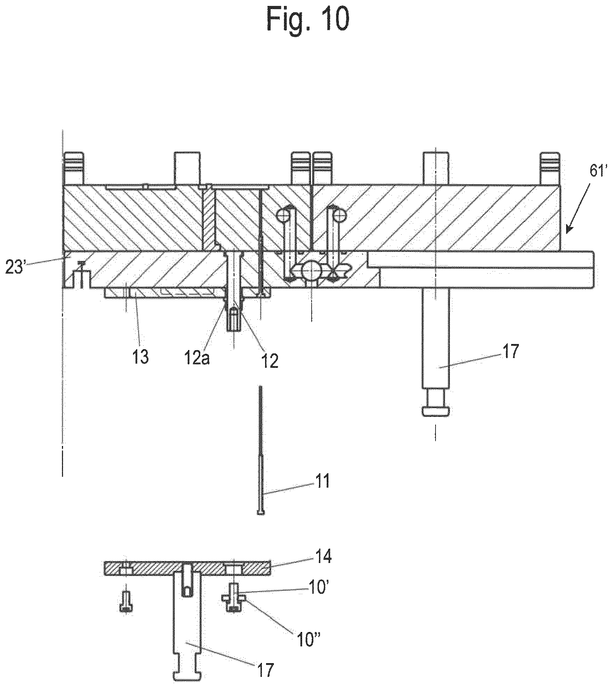

In Fig. 5, 6 und Fig. 10 wird zur Festlegung der Auswerfereinrichtung an der Trägerplatte 23 eine Haltescheibe 10" genutzt. Diese weist eine Niederhaltefunktion des mechanischen Verbindungsmittels 10' auf. Die Führung der Auswerfereinrichtung bleibt dabei erhalten. Die Haltescheibe kann auch als Sicherungsscheibe bezeichnet werden. Bei Lösen dieser Scheibe kann eine Demontage der Auswerfereinrichtung von der Trägerplatte 23 bzw. vom Formeinsatz 2 erfolgen. Fig. 10 zeigt eine einfache, partielle und schonende Demontage der Auswerferstangen. Hierzu kann nach der Entnahme der Haltescheibe 10" die Auswerferhalteplatte 13 entnommen werden um einzelne Auswerferstangen 11 auszutauschen und zu warten. Hierbei trägt ein Führungsbolzen 12 das Gewicht der Auswerferhalteplatte 13, und optional daran befindliche weitere Teile, und nicht mehr die Auswerferstangen.

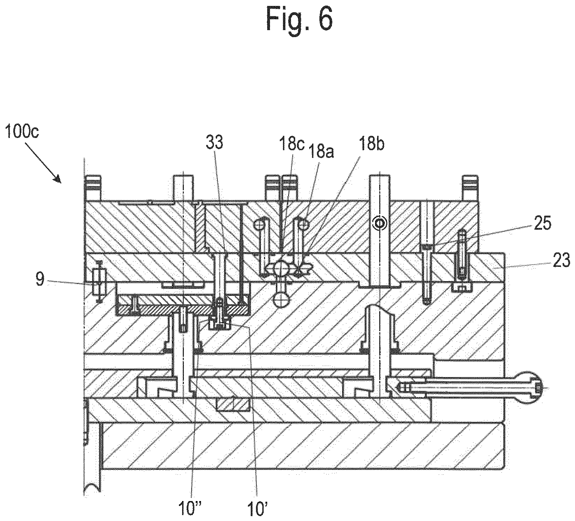

In Fig. 6 ist jeweils eine Trägerplatte 23 mit mehreren Formeinsätzen 1 und 2 abgebildet. Somit werden mehrere Formeinsätze durch eine Trägerplatte zugleich gehalten.

In Fig. 6 erfolgt in Abwandlung zur Fig. 1-5 die Temperiermittelverteilung in der Trägerplatte 23. Dadurch wird lediglich eine Öffnung im Übergangsbereich zwischen der ersten und der zweiten Baueinheit 61, 62 notwendig. Zudem erfolgt eine vorteilhafte Temperiermittelverteilung innerhalb der Trägerplatte 23.

Die Temperiermittelverteilung erfolgt in Fig. 6 zu einer Mehrzahl von Formeinsätzen in der Trägerplatte ermöglicht somit geometrisch mehr Freiheiten.

Zudem sind weniger Verbindungsbohrungen in der Halteplatte 3 notwendig, die geometrisch nur beschränkt Platz für derartige Bohrungen aufweist, da die Verbindungsbohrung an mehrere Einsätze an dieser Stelle umgesetzt werden müssten.

Die Trägerplatte 23 ist bei der in Fig. 6 dargestellten Variante optional so gewählt, das eine Mehrzahl von Formeinsätzen pro Trägerplatte nicht ein Gesamtgewicht dieser Einheit aus Trägerplatte und Formeinsätze von mehr als 25 kg, vorzugsweise mehr als 8kg, überschreitet.

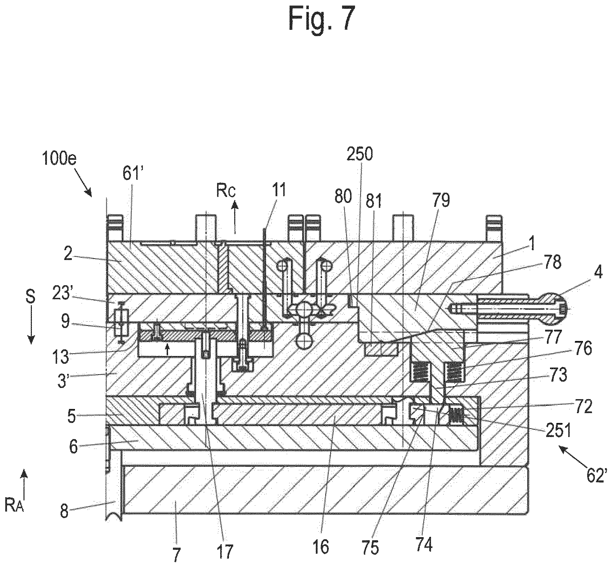

Fig. 7 zeigt eine gegenüber der Fig. 2a modifizierte Werkzeughälfte 100e. Diese Werkzeughälfte ist eine erfindungsgemäße Ausführungsvariante der Erfindung und weist einen entsprechenden Verriegelungsmechanismus auf. Ausgehend von den analog ausgebildeten Formeinsätzen 1 und 2 ist eine Trägerplatte 23' vorgesehen. Die Trägerplatte 23' weist randseitig eine Aussparung 80 auf.

An die Trägerplatte 23' schließt sich eine Halteplatte 3' an. Analog zu Fig. 2a ist an der Trägerplatte 23' die Auswerfereinrichtung mit dem Riegelbolzen 17 festgelegt. Der Riegelbolzenkopf ist dabei in Fig. 7 durch Vorsprünge des Verriegelungsmittels durch einen vorzugsweise formschlüssigen Eingriff am Kopf des Riegelbolzens gegen eine Bewegung gesichert bzw. verriegelt. Weiterhin weist die Werkzeughälfte 100e die Halteplatte 5 auf. Benachbart zu dieser Halteplatte 5 ist analog zu Fig. 2a das linear verschiebbares Verriegelungsmittel 16 angeordnet.

Dieses ist allerdings im Unterschied zur Fig. 2a in seiner Bewegungsrichtung federgelagert durch ein Federelement 72. Weiterhin verfügt das Verriegelungsmittel über eine Öffnung 75 mit einer Schrägschulter 74. Gegen diese Schrägschulter 74 kann ein zapfenförmiger oder stiftförmiger Vorsprung 73 gepresst werden, welcher durch eine Ausweichbewegung des Verriegelungsmittels in die Öffnung 75 gedrückt werden kann. Durch diese Ausweichbewegung wird das Federelement 72 gespannt und das Verriegelungsmittel führt eine Linearbewegung aus unter Entriegelung des Kopfes des Riegelbolzens aus.

Der zapfenförmige Vorsprung ist einem, vorzugsweise in Stapelrichtung S, federnd gelagerten Bauteil 77 zugeordnet. Dieses verfügt stirnseitig über eine Anschrägung, welche an einer Schulter 78 eines Schiebeelements 79 anliegt. Dieses Schiebeelement 79 weist randseitig ein Betätigungselement 4, z.B. einen Handgriff, auf. Dieses Schiebeelement 79 ist durch eine Haltevorrichtung 81 vor einem unbeabsichtigten Verschieben gesichert und bildet ein erstes Verriegelungsmittel. Ein endständiger Vorsprung greift zudem formschlüssig in die Aussparung 80 die Trägerplatte 23' ein und verriegelt diese gegen eine Verschiebung in Stapelrichtung S.

Beim Betätigen des Auswerferbolzens 8 erfolgt eine Bewegung RA in der oder entgegen der Stapelrichtung S. Dadurch kann die Auswerfereinrichtung zum Formeinsatz 1 oder 2 in Richtung RB und RC gedrückt werden. Optional wird erst in diesem hochgefahrenen Zustand des Auswerferbolzens, also nach erfolgter Bewegung in Richtung RA, wird gibt ein Fixiermechanismus, das Schiebeelement 79 frei. Nach erfolgter Bewegung des Auswerferbolzens, in Richtung RA, kann der stiftförmige Vorsprung die Schrägschulter 74 überhaupt, bei Betätigung vom Betätigungselement 4, erreichen. Somit besteht bei Produktionsbetrieb kein mechanisches Zusammenwirken zwischen dem Betätigungselement 4 und dem Stammauswerferpaket. Das vermeidet Verschleiß an sonst vorliegenden Konaktflächen und erhöht die Sicherheit gegen ungewolltes Lösen der ersten und zweiten Baueinheit voneinander.

Optional kann der Stecker 9 auch ein Sensor sein, der während des Betriebes prüft, ob sich die erste und zweite Baueinheit voneinander lösen. Bewegt sich die Trägerplatte 23 relativ, insbesondere entgegen der Stapelrichtung S, zur Halteplatte 3 stoppt die Maschine sofort. Somit kann ein versehentliches Lösen und herausziehen vermieden werden.

Der Verriegelungsmechanismus verriegelt somit an einer ersten Verriegelungsposition 250 die mit den Formeinsätzen 1 und 2 verbundene Trägerplatte 23. Da die Trägerplatte 23 starr mit Formeinsätzen verbunden ist, verriegelt der Verriegelungsmechanismus an der ersten Verriegelungsposition auch die beiden Formeinsätze.

An einer zweiten Verriegelungsposition 251 wird der Riegelbolzen 17 der Auswerfereinrichtung verriegelt.

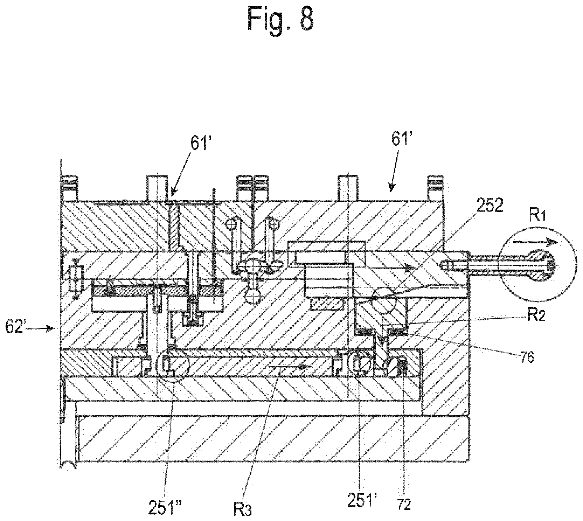

Fig. 8 zeigt die gleichzeitige Verriegelung mehrerer Auswerfereinrichtungen an jeweils den zweiten Verriegelungspositionen 251' und 251" durch ein einziges Verriegelungsmittel 16.

Fig. 8 zeigt die Entriegelungsmechanik der Werkzeughälfte 100e. Bei Betätigung des Betätigungselements 4 führt die Schulter 78 eine Gleitbewegung bzw. Gleichführung 252 auf der Anschrägung der Stirnseite des Bauteils 77 aus. Dadurch kommt es zur randseitigen Entriegelung der Trägerplatte 23'. Sodann wird das Bauteil 77 in einer Ausnehmung geführt und in die Bewegungsrichtung R2 bewegt. Dabei wird der Vorsprung 73 entlang der Schrägschulter 74 in die Öffnung 75 geführt. Zudem erfolgt eine Komprimierung der Federelemente 76 und 72 und das Verriegelungsmittel führt eine Bewegung in die Bewegungsrichtung R3 aus. Dadurch kommt es zur Entkopplung des Riegelbolzens 17.

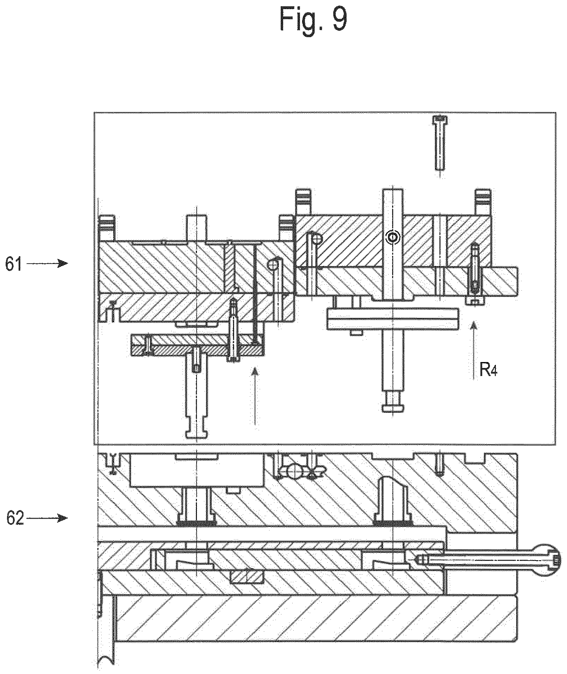

Sodann kann die erste Baueinheit 61' mit der Trägerplatte 23', den Formeinsätzen 1 und/oder 2 und der Auswerfereinrichtung in Bewegungsrichtung R4 von der zweiten Baueinheit 62' getrennt werden. In einer zweiten Baueinheit kann eine Mehrzahl an erster Baueinheiten verbaut werden, die durch eine Betätigungsvorrichtungen synchron oder durch mehrere Betätigungsvorrichtungen unabhängig lösbar sind. Ein synchroner Lösungsvorgang für mehrere erste Baueinheiten 61' ist in Fig. 9 dargestellt.

In Fig. 8 und 9 weist der Vorsprung 73 und die Schulter 74 keine mechanische Verbindung zu dem Verriegelungsmittel 16 auf, sofern das Betätigungselement nicht betätigt wurde nicht betätigt. Dies gilt auch für alle anderen Ausführungsbeispiele.

Fig. 10 zeigt die weitere Demontage der ersten Baueinheit 61' unter Trennung der Auswerfereinrichtung. Durch Lösen des mechanischen Verbindungsmittels 10' kann die Haltescheibe 10" aus dem Führungsbolzen 12 der Auswerfereinrichtung herausgelöst werden. Sodann kann die Auswerfergrundplatte 14 und der daran befestigte Riegelbolzen 17 von der Auswerferhalteplatte 13 gelöst werden. Durch eine Entnahme der Auswerferstange 11, welche sich durch die Auswerferhalteplatte 13, die Trägerplatte 23' und den Formeneinsatz 2 erstreckt, können die vorgenannten Bauteile voneinander gelöst werden. Dies ermöglicht eine einfache und schnelle Wartung einzelner Bauteile der Auswerfereinrichtung und ggf. deren Austausch. Weiterhin können mehrere Auswerferpakete bzw. mehrere Auswerfergrund- und -halteplatten übereinandergeschichtet werden und mittels der Haltescheibe 10a' fixiert bzw. gesichert werden.

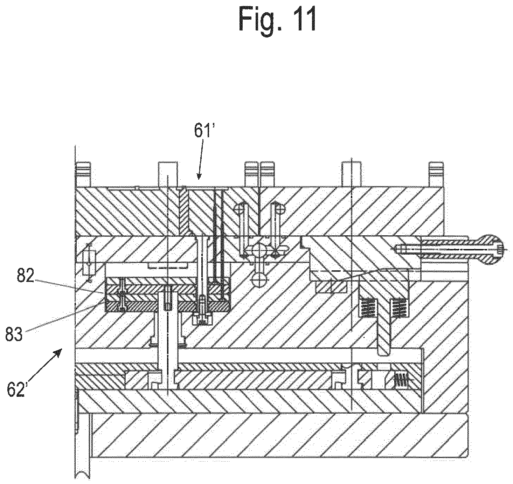

Die Erfindung ist nicht auf die in Fig. 1-10 dargestellte Ausführungsvariante beschränkt. Einzelne konstruktive Elemente können auch in andere Varianten für Werkzeuge übernommen werden. Allerdings kann auch die Werkzeughälfte in den Varianten der Fig. 1-10 weiter modifiziert werden. So ist in Fig. 11 eine sogenannte Doppelauswerfereinrichtung realisiert mit zwei übereinander angeordneten Auswerferpaketen 82 und 83. Jedes dieser Auswerferpakete weist eine Auswerfergrundplatte und eine Auswerferhalteplatte auf. Die Doppelauswerfereinrichtung wird mittels einer Haltescheibe analog zu Fig. 5-10 in der ersten Baueinheit angeordnet.

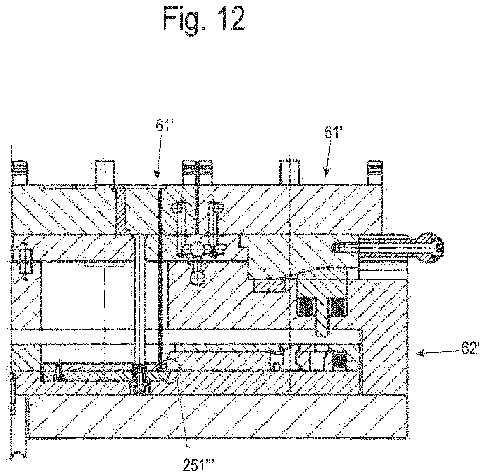

Fig. 12 zeigt eine Ausführungsvariante mit einem sogenannten Wechselauswerferpaket, welches in einem sogenannten Stammauswerferpaket integriert ist. Auch hierbei erfolgt die Verriegelung der Trägerplatte mit den Formeinsätzen an einer ersten Verriegelungsposition und die Verriegelung der Auswerfereinrichtung an einer zweiten Auswerferposition 251‴. Dabei können im Vergleich zu den in Fig. 1-11 dargestellten Auswerfereinrichtungen einige Bauteile entfallen. Allerdings sind die Auswerferstangen 11 länger und folglich anfälliger für Verformungen.

In Fig. 8 und 9, aber auch in den weiteren Figuren erkennt man, dass eine Mehrzahl von Baueinheiten aus Formeinsätzen durch einen oder eine Mehrzahl von gleichartigen Verriegelungsmechanismen lösbar ist.

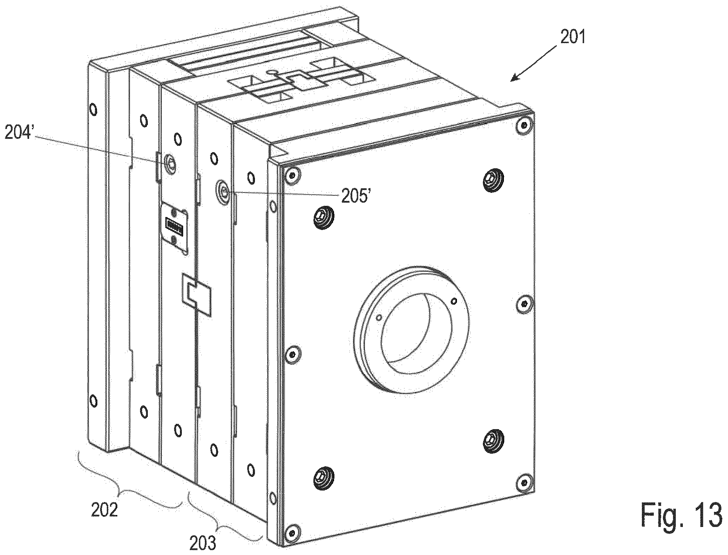

Nachfolgend soll die Verriegelung und Entriegelung eines Formeneinsatzes anhand der Fig. 13-26 näher erläutert werden. Dieses Verriegelungs- und Entriegelungsprinzip ist auch auf die Varianten der Fig. 1-12 übertragbar.

In Fig. 13 ist zunächst ein erfindungsgemäßes Werkzeug 201 dargestellt. Dieses umfasst zwei erfindungsgemäße Werkzeugelemente 202 und 203, die als Spritzguss-Werkzeughälften ausgebildet sind. Besonderer Fokus soll dabei auf die Auswerferseite gelegt werden, welche nachfolgend im Detail diskutiert wird. Es ist jedoch auch möglich Auswerfer und einen entsprechend analogen Mechanismus zum Werkzeugelement 202 auch für die Düsenseite, also das Werkzeugelement 203 zu realisieren.

In Fig. 13 befindet sich das Werkzeug 201 im geschlossenen Zustand. Es weist allerdings an jedem der beiden Werkzeugelemente 202 und 203 jeweils von außen zugängliche Werkzeugaufnahmen 204' und 205', hier zur Aufnahme eines Imbusschlüssels auf. Alternativ zur Werkzeugaufnahme in Fig. 13-26 kann allerdings auch ein z.B. ein von außen zugänglicher Hebel, wie dies in Fig. 1-12 dargestellt ist, vorgesehen sein. Weiterhin dargestellt sind die Auswerferstangen 218.

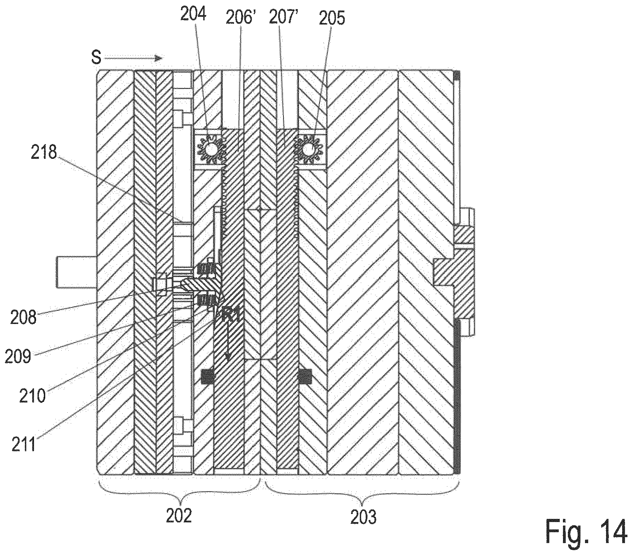

Fig. 14 zeigt eine Stange, an welcher zumindest ein Zahnrad angeordnet ist. Diese Stange weist stirnseitig die Werkzeugaufnahme 204' auf. Die Stange wird somit als Betätigungselement 204 angesehen, welches analog zum Hebel der Fig. 1-12 mit einem ersten Verriegelungsmittel 206' zusammenwirkt. Das Verriegelungsmittel 206' ist zumindest bereichsweise als Zahnstange ausgebildet. In die Zähne dieser Zahnstange bzw. des Zahnstangenabschnitts wirken mit dem Zahnrad des Betätigungselements 204 der ersten Werkzeughälfte 202 und/oder des Betätigungselements 205 der zweiten Werkzeughälfte 203 zusammen oder alternativ mit einem Zahnstangenabschnitts des Betätigungselements 4 zusammen. In der Schnittebene A-A des Werkzeugs 1 erkennt man lediglich für jede Werkzeughälte jeweils ein erstes Verriegelungsmittel 206' und 207' welche bei Betätigung des Betätigungselements 204 und 205 in Bewegung versetzt werden. Das Verriegelungsmittel 206' und 207' bewegt bei dessen Betätigung einen Formeinsatz 214. Die Kraftübertragung kann einseitig durch jeweils nur ein Verriegelungsmittel 206' und/oder 207' erfolgen oder bevorzugt für eine gleichmäßigere Bewegung des Formeinsatzes 214 durch zwei an gegenüberliegenden Seiten des Formeinsatzes 214 angeordnete erste Verriegelungsmittel 206'. 206" für das erste Werkzeugelement 202 oder erste Verriegelungsmittel 207' und 207" für das zweite Werkzeugelement 203.

Analog zur Fig. 1-12 weist das jeweilige erste aber auch das zweite Werkzeugelement mehrere Bauteile auf, welche in Stapelrichtung S im Wesentlichen übereinander oder ineinander angeordnet sind.

Das Verriegelungsmittel 206' kann mit einem zapfenartigen Vorsprung 208 in Kontakt stehen. Dieser zapfenförmige Vorsprung 208 kann auch als stiftförmig bezeichnet werden. Er ist federgelagert in Stapelrichtung S durch eine Feder 209. Es sind allerdings auch andere elastische Materialien zur Lagerung des Vorsprungs 208 möglich.

Der Vorsprung 208 weist eine Schulter 210 auf, welche bei Betätigung des Betätigungselements 204 an einer schräg zur Längsrichtung des ersten Verriegelungsmittels 206' verlaufenden Wandungsschräge 2011 des Verriegelungsmittels 206' geführt wird.

Am zweiten Werkzeugelement 203, also der Düsenseite, ist eine vereinfachte Version einer Verriegelung dargestellt.

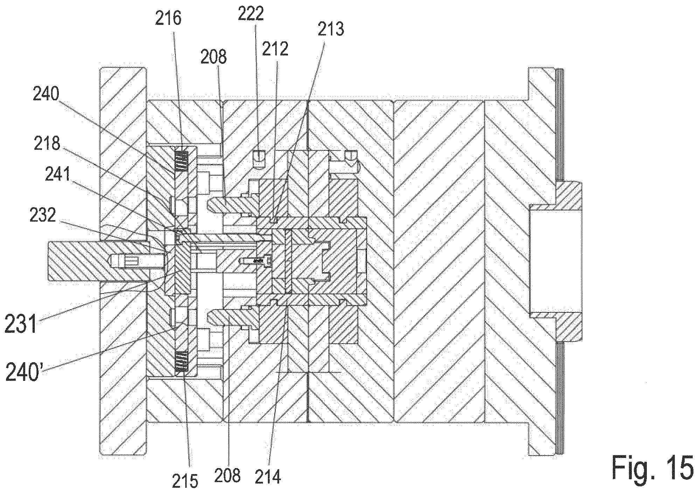

Fig. 15 zeigt einen Schnitt entlang der Schnittebene B-B/C-C senkrecht zur Schnittebene A-A der Fig. 14. Der Übersichtlichkeit halber wird zunächst nur auf die Auswerferseite des Werkezugs 1 beschrieben. Das erste Verriegelungsmittel 206', 206" weist jeweils eine randseitige Führungsleiste 212 auf. Diese ist in einem in einer Außenwandung des Formeinsatzes 214 angeordneten Führungskanals 213 vorgesehen.

Der Formeinsatz 214 weist zumindest eine randseitige Fläche auf, welche den Hohlraum einer Spritzgussform beschränkt. Die Werkzeughälfte weist zudem Kanäle 222 für ein Temperiermedium auf.

Ebenfalls dargestellt, jedoch in geschnittener Ansicht ist der federgelagerte Vorsprung 208. Eine Auswerfereinrichtung 232 mit einer Auswerfergrundplatte 231, einer Auswerferhalteplatte 230 und den Auswerferstangen 218 ist mit dem Formeinsatz 214 z.B. mittels einer Schulterpassschraube 241, analog wie in Fig. 1 und 2 der o.g. Ausführungsvariante verbunden.

Die Auswerfereinrichtung 232 sitzt endständig auf einer Stamm-Auswerferdruckplatte 236" auf und wird von einer Stamm-Auswerferdruckplatte 236' mit zweiten Verriegelungsmitteln 240' und 240" auf der Stamm-Auswerferdruckplatte 236" gehalten bzw. mit dieser verriegelt. Die Gesamtheit aus Auswerfereinrichtung 232, Stamm-Auswerferdruckplatte 236' und Stamm-Auswerferhalteplatte 236" ist im geöffneten Zustand innerhalb des ersten Werkzeugelements 202 in bzw. parallel zur Stapelrichtung S verfahrbar ausgebildet. Die Stamm-Auswerferdruckplatte 236' und die Stamm-Auswerferhalteplatte 236" wird nachfolgend zur Vereinfachung als Stamm-Auswerferhaltevorrichtung 236 bezeichnet.

Die zweite Verriegelungsmittel 240' und 240" blockieren in Fig. 15 randseitig die Bewegung der Auswerfereinrichtung 232 und verhindern das Herauslösen des Bausatzes aus Formeinsatz 214 und der Auswerfereinrichtung 232 bzw. Auswerferpaket aus dem Werkzeugelement. Diese Verriegelungsmittel 240', 240" sind vorzugsweise federgelagert durch die Federelemente 215 und 216.

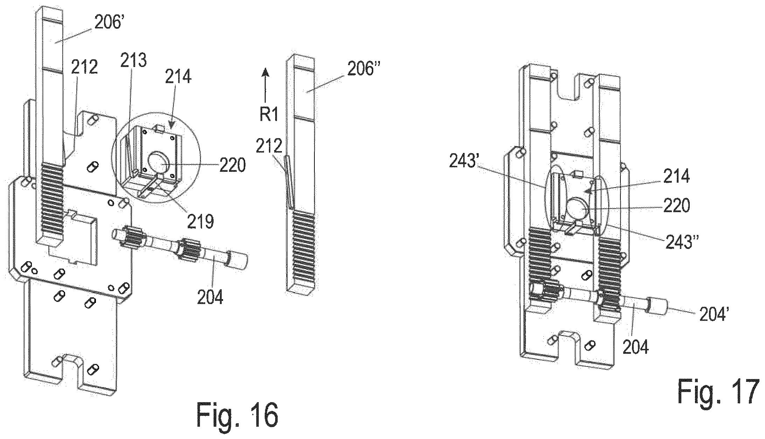

In Fig. 16 und Fig. 17 sind die ersten Verriegelungsmittel 206', 206" gemeinsam mit dem Betätigungselement 204 in Zusammenwirkung mit dem Formeinsatz 214 als erster Riegelmechanismus dargestellt. Die jeweilige Führungsleiste 212 weist bevorzugt zumindest abschnittsweise einen schrägen Verlauf in Bezug auf die Längsachse A des ersten Verriegelungsmittels 206', 206" oder in Bezug auf die Stirnfläche des ersten Werkzeugelements 202 auf. Die Stirnfläche ist dabei die Kontaktfläche mit dem zweiten Werkzeugelement 203. Dies ist von Vorteil, da somit der Formeinsatz zur leichteren Entnahme leicht angehoben wird. Eine Führungsleiste welche durchgehend parallel zur Längsachse A des Verriegelungsmittels 206, 206" verläuft kann allerdings auch in einer weniger bevorzugten Ausführungsvariante verwandt werden.

Im zusammengesetzten Zustand ist der Verlauf beider Führungsleisten 212 der beiden ersten Verriegelungsmittel identisch und sie stehen im montierten Zustand des Formeinsatzes 214 jeweils aus der Wand des Verriegelungsmittels 206', 206" zum Formeinsatz 214 hin hervor. Der Formeinsatz wiederum weist randseitig zwei Führungskanäle 213 auf, von denen in Fig. 216 lediglich einer bezeichnet ist.

Zur Einpassung des Formeinsatzes 214 die vom Werkzeugelement bereitgestellte Aufnahme weist der Formeinsatz eine randseitige Zentrierung 219 auf. Bei Linearbewegung der Verriegelungsmittel 206' und 206" infolge der Betätigung des Betätigungselements in Verfahrrichtung R1 erfolgt eine Absenkung des Formeinsatzes in die vorgenannte Aufnahme. Dies ist entsprechend in Fig. 17 dargestellt.

Die vorgenannte Stirnseite 220 des Formeinsatzes 214, welcher den Spritzgusshohlraum zumindest einseitig begrenzt, ist ebenfalls in Fig. 16 dargestellt.

Zudem kann man die erste Verriegelungsposition 243' und 243" des Formeinsatzes 214 im zweiten Baueinsatz 62" in Fig. 16 und 17 erkennen.

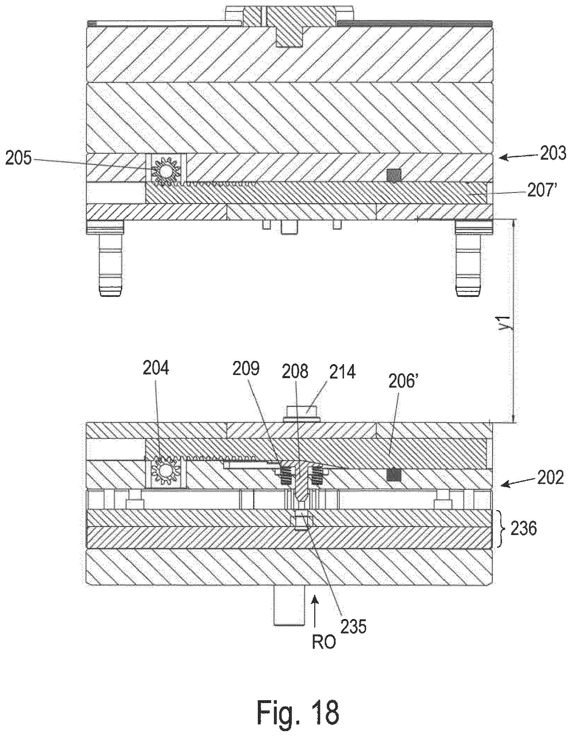

Fig. 18 zeigt die Werkzeugelemente 202 und 203 des erfindungsgemäßen Werkzeugs 201 im geöffneten Zustand. Dieser wird in Fig. 18 als Zustand F1 bezeichnet. Dabei sind die Werkzeughälften in einem Abstand Y1 zueinander beabstandet. Bolzenförmige Zentrierelemente 217 und 221 dienen einer optimalen Führung der beiden Werkzeugelemente zueinander hin bei Verschluss des Werkzeugs.

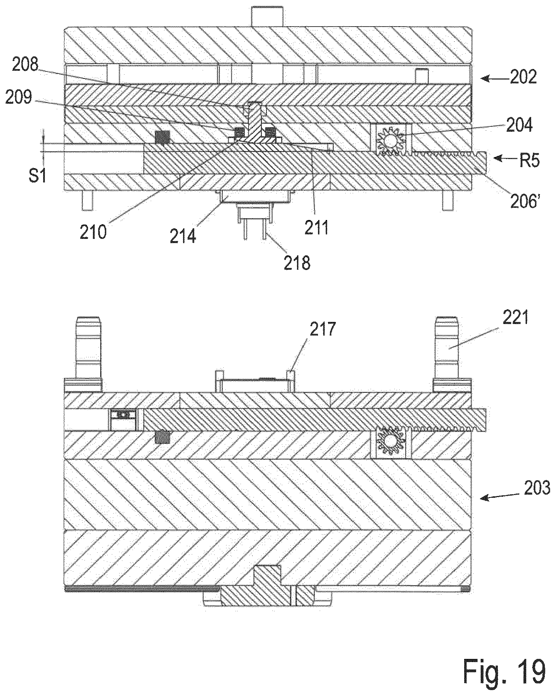

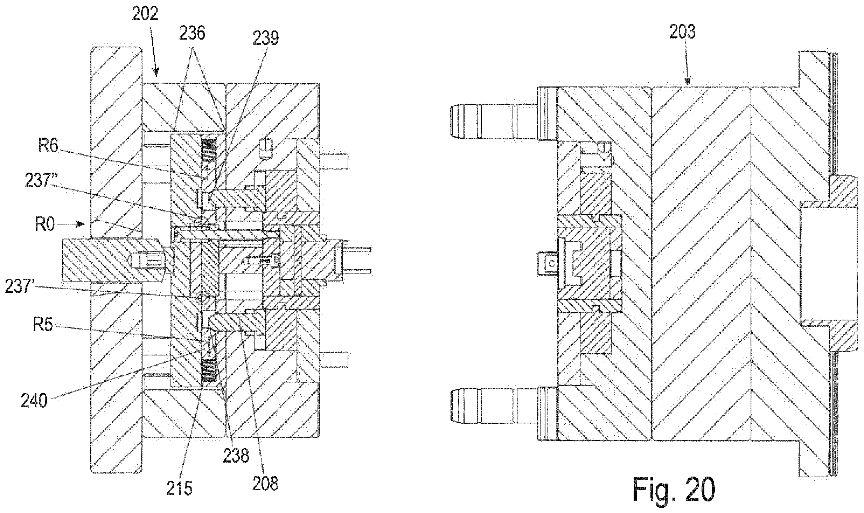

Von dem geöffneten Zustand F1 wird nunmehr die Auswerfereinrichtung 232 und die Stamm-Auswerferhaltevorrichtung 236 in Bewegungsrichtung R5 parallel zur Stapelrichtung S zum Formeinsatz 214 um den Betrag S1 hin verfahren. Dadurch stehen die Auswerferstangen 218 der Auswerfereinrichtung 232 in einem bestimmten Betrag Z1 aus dem Formeinsatz 214 hervor. Dieser Zustand der vorgefahrenen Stamm-Auswerferhaltevorrichtung 236 wird nachfolgend als Zustand F2 bezeichnet. Dieser ist in Fig. 19 und 20 dargestellt.

Fig. 20 zeigt eine andere Schnittebene der beiden Werkzeugelemente 202 und 203 im Zustand F2. In Fig. 20 erkennt man, dass zwei federgelagerte Vorsprünge 208 im ersten Werkzeugelement 202 vorgesehen sind. Die gleiche Funktion kann allerdings auch durch lediglich einen Vorsprung erreicht werden, wobei zumindest zwei der Vorsprünge eine gleichmäßigere Führung des Riegelmechanismus ermöglichen.

Die Vorsprünge 208 weisen endständige Schulterflächen 238 auf, welche im Zustand F2 auf einer Schulter 239 der zweiten Verriegelungsmittel 240', 240" aufliegen. Erfolgt nun eine Bewegung der Vorsprünge 208 parallel zur Stapelrichtung vom Formeinsatz 214 weg, so erfolgt eine Verschiebung der Verriegelungsmittel 240' und 240" in Bewegungsrichtung R4, senkrecht zur Stapelrichtung. Der jeweilige Vorsprung 208 greift in eine Öffnung des Verriegelungsmittels 240' oder 240" ein und blockiert die durch die Rückstellkraft der Federn 215 oder 216 wirkende Bewegung entgegen der Bewegungsrichtung R4. An einer zweiten Verriegelungsposition 237' und 237" wird durch die lineare Verschiebung der zweiten Verriegelungsmittel 240' und 240" die Auswerfereinrichtung 232, insbesondere Auswerfergrundplatte 231, freigegeben.

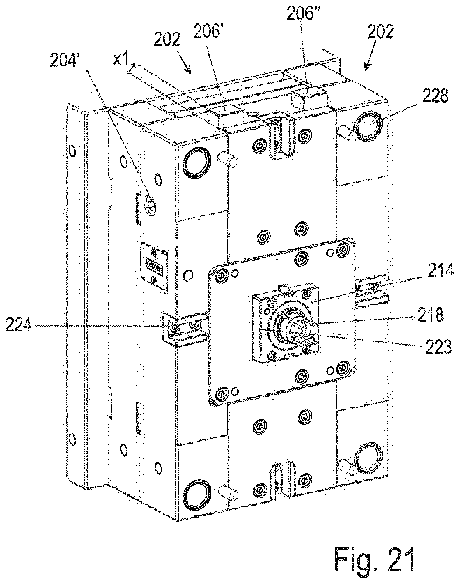

Dieser entriegelte Zustand wird F3 genannt und ist nachfolgend mit Bezug auf die Fig. 21 bis 23 beschrieben.

In Fig. 21 bis 23 sind die erste und die zweite Werkzeughälfte 202, 203 jeweils mit einem entriegelten Formeinsatz 214, 227 dargestellt. Die Werkzeughälften weisen an den zueinander zugewandten Seiten weitere Zentriermittel in Form von Zentrierleisten 225 und Zentrierleistenaufnahmen 224 auf. In Fig. 21 erkennt man zudem die zu den Zentrierelementen korrespondierenden Zentrieröffnungen 228.

Im Zustand F3 weist die erste Werkzeughälfte in Fig. 21 einen aus dem Werkzeug bereichsweise hervorstehenden Formeinsatz 214 auf. Die Entnahme des Formeinsatzes zu dessen Austausch wird u.a. durch seine hervorstehende Position erleichtert, da sich dadurch randseitige Griffflächen 223 ergeben, an welchen der Formeinsatz leichter gegriffen und entnommen werden kann.

Als Erkennungszeichen, dass sich der Formeinsatz im entriegelten Zustand befindet, stehen die ersten Verriegelungsmittel 206' und 206", welche auf den Vorsprung 208 einwirken, aus dem Werkzeugelement um einen Betrag X1 hervor.

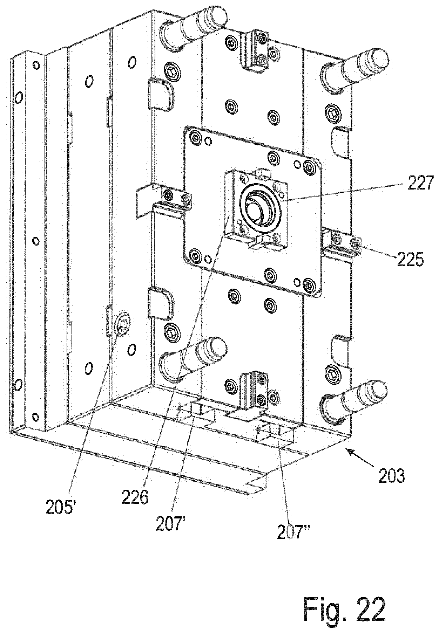

Gleiches gilt für den Zustand F3 der zweiten Werkzeughälfte, welcher in Fig. 22 dargestellt ist. Dabei steht der Formeinsatz 227 aus dem Werkzeugelement 203 hervor und bietet randseitige Griffflächen 226 zur leichteren Entnahme. Auch im zweiten Werkzeugelement 203 stehen die ersten Verriegelungsmittel 207', 207" aus dem Werkzeugelement bereichsweise hervor.

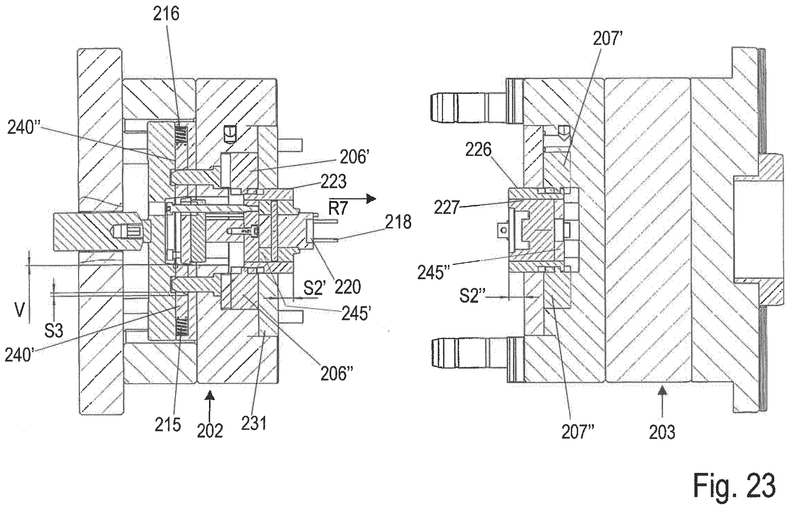

Der Betrag um welchen die jeweiligen Formeinsätze 214 und 227 aus dem jeweiligen Werkzeugelement 202, 203 hervorstehen sind in Fig. 23 mit S2' und S2" bezeichnet. Die Entriegelungsposition A ist zweiten Verriegelungsmittel 240', 240" ist erkennbar. Die Entnahme kann in Bewegungsrichtung R2 parallel zur Stapelrichtung S erfolgen. Der Versatz der Verriegelungsmittel 204', 240" aufgrund der Bewegung des Vorsprungs 208 ist mit S3 bezeichnet.

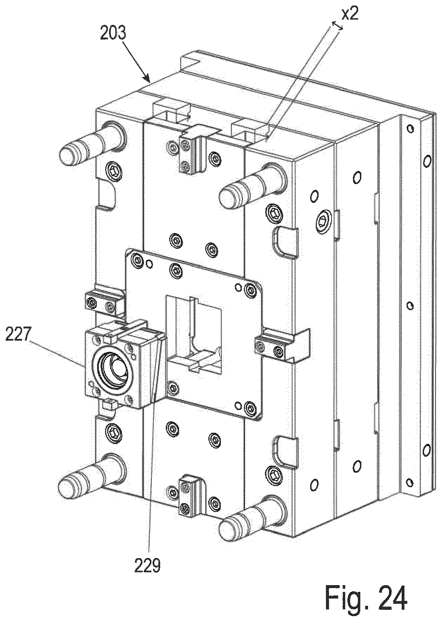

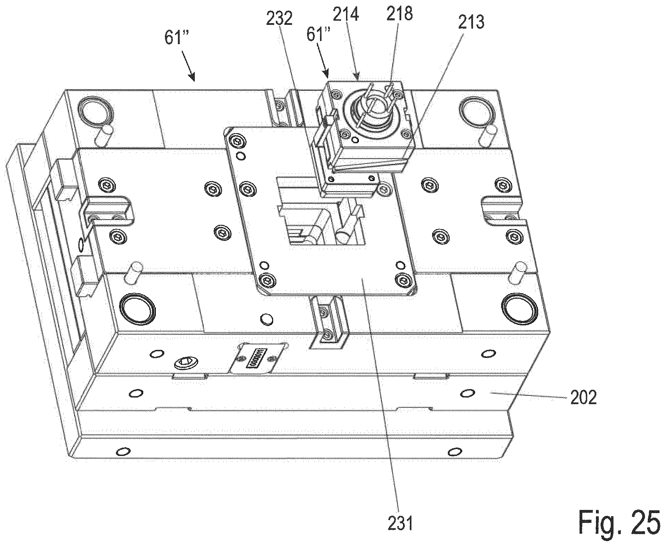

In Fig. 24 und 25 ist der Zustand eines entnommenen Formeinsatzes 214 oder 227 aus dem jeweiligen Werkzeugelement 202 oder 203 dargestellt. In Fig. 24 erkennt man, dass auch der Formeinsatz 227 randseitig einen Führungskanal 229 mit schrägem Verlauf bezogen auf die Stirnfläche des zweiten Werkzeugs aufweist.

Fig. 25 zeigt die Entnahme der Gesamtheit aus Formeinsatz 214 und der Auswerfereinrichtung 232 aus der Aufnahme 250 des ersten Werkzeugs 202. Man erkennt, dass sowohl die Auswerfereinrichtung 232 als auch der Formeinsatz 214 entriegelt ist. Während die Auswerfereinrichtung 232 durch die zweiten Verriegelungsmittel 240' und 240" im Werkzeugelement 202 gehalten wurde, so wurde der Formeinsatz im Wesentlichen durch das erste Verriegelungsmittel im Werkzeugelement gehalten.

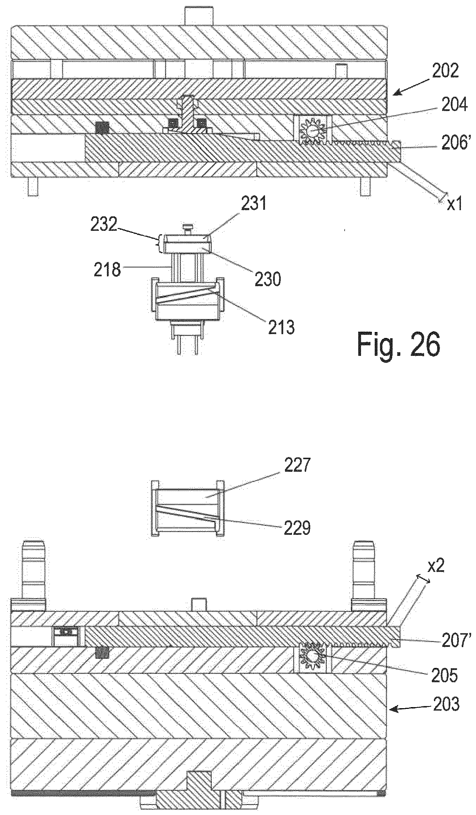

Schließlich zeigt Fig. 26 nochmals die Entnahme beider Formeinsätze 214 und 227. Anschließend kann durch Lösen der Schulterpassschraube 241 die Auswerfereinrichtung 232 vom Formeinsatz 214 getrennt werden. Alternativ zur Schulterpassschraube können auch eine Schraube und eine Haltescheibe zur Verbindung der beiden Bauelemente in analoger Konstruktion zu Fig. 10 genutzt werden.

Die Ausführungsvarianten der Fig. 1-12 und 13-26 zeigen jeweils eine getrennte Verriegelung einer Auswerfereinrichtung und eines Formeneinsatzes an unterschiedlicher Position im Werkzeug, wobei durch Betätigung eines einzigen Betätigungselements eine Entriegelung beider Bauteile erfolgt, so dass die Gesamtheit aus Formeinsatz und Auswerfereinrichtung aus dem Werkzeug entnehmbar ist. Die Gesamtheit ist in Fig. 13-26 ebenfalls als erste Baueinheit 61', 61" zu verstehen. Der Rest des Werkzeugelements bildet die zweite Baueinheit 62' oder 62".

Im Kontext der Fig. 13-26 ist es selbstverständlich auch möglich, mehrere Baueinheiten aus Formeinsatz und Auswerfereinrichtung auf einer Trägerplatte anzuordnen und diese gesamtheitlich im Werkzeug festzulegen. In diesem Fall kann der jeweilige Führungskanal 213 statt an dem Formeinsatz 214 auch an der Trägerplatte angeordnet sein.

Weiterhin erlaubt auch die Variante der Fig. 13-26 durch den Verriegelungsmechanismus die Realisierung eines begrenzten Bewegungsspiels bzw. Passspiels zwischen der Baueinheit aus Formeinsatz und Auswerfereinrichtung und den restlichen Bauteilen des ersten Werkzeugelements schräg zur Stapelrichtung S wie dies im Detail in Fig. 1-12 beschrieben wurde. Hierfür ist ein entsprechendes Passspiel z.B. zwischen dem Führungskanal 212 und der Führungsleiste 213 vorzusehen.

Die schnelle Entnahme durch die Verriegelung und das vorteilhafte Bewegungsspiel ergänzen sich dabei vorteilhaft so dass ein schneller Austausch der Formeinsätze im Werkzeug ermöglicht werden kann.

### Bezugszeichenliste

- 1: Formeneinsatz
- 2: Formeneinsatz
- 3: Erste Halteplatte
- 4: Betätigungselement
- 5: Stamm Auswerferhalteplatte
- 6: Stamm Auswerferdruckplatte
- 7: Aufspannplatte
- 8: Ausstoßerbolzen
- 9: Steckverbindung
- 9a: Stecker
- 9b: Steckbuchse
- 10: Schulterpassschraube
- 11: Auswerferstange/Auswerfer
- 12: Führungsbolzen
- 12a: Führungsbuchse
- 13: Auswerferhalteplatte
- 14: Auswerfergrundplatte
- 15: Rastmittel
- 16: Verriegelungsmittel
- 17: Riegelbolzen
- 18: Temperierkanal
- 18a: Temperierkanal
- 18b: Temperierkanal
- 18c: Temperierkanal
- 19: Zentrierleiste (19a, 19b)
- 20: mechanisches Verbindungsmittel
- 20a: Gewindestift
- 20b: Bolzenabschnitt
- 20c: Schraubenkopf / Vorsprung
- 21: Bohrung
- 21a: Gewindesegment
- 21b: Bohrloch
- 21c: Ausnehmung
- 22: Spalt/Spielanpassung
- 22b: Spalt
- 23: Trägerplatte
- 24: Gewindestift
- 25: Schraube oder Steckbolzen
- 26: Führungskanal
- 28: Formkern
- 32: Vorsprung

- 23': Trägerplatte
- 10': mechanisches Verbindungsmittel
- 10": Haltescheibe
- 3': Halteplatte
- 41: Führungskanal
- 51: Vorsprung
- 52: Aufnahme
- 61: erste Baueinheit
- 61a, 61b: einzelne Baueinheiten
- 61': erste Baueinheit
- 61": erste Baueinheit
- 62: zweite Baueinheit / Stammbaueinheit
- 62': zweite Baueinheit
- 62": zweite Baueinheit
- 72: Federelement
- 73: stiftförmiger Vorsprung
- 74: Schrägschulter
- 75: Öffnung
- 76: Federelement
- 77: Bauteil
- 78: Schulter
- 79: Schiebeelement
- 80: Aussparung
- 81: Haltevorrichtung
- 82: Auswerfereinrichtung
- 83: Auswerfereinrichtung

- R_{A}: Bewegungsrichtung
- R_{B}: Bewegungsrichtung
- R_{C}: Bewegungsrichtung
- R0: Bewegungsrichtung
- R1: Bewegungsrichtung
- R2: Bewegungsrichtung
- R3: Bewegungsrichtung
- R4: Bewegungsrichtung
- R5: Verfahrrichtung
- R6: Bewegungsrichtung
- R7: Bewegungsrichtung

- A: Längsachse
- S: Stapelrichtung
- V: Verriegelung
- X1: Betrag/Abstand
- Y1: Abstand
- Z1: Betrag/Abstand
- S1: Betrag/Abstand
- S2': Betrag/Abstand
- S2": Betrag/Abstand
- S3: Versatz

- F1: erster Zustand
- F2: zweiter Zustand
- F3: dritter Zustand
- F4: vierter Zustand

- 100 a: Werkzeughälfte
- 100 b: Werkzeughälfte
- 100 c: Werkzeughälfte
- 100 d: Werkzeughälfte
- 100 e: Werkzeughälfte

- 105: Spalt
- 110: Bewegungsbereich
- 201: Spritzguss-Werkzeug
- 202: erstes Werkzeugelement
- 203: zweites Werkzeugelement
- 204': Werkzeugaufnahme
- 205': Werkzeugaufnahme
- 204: Betätigungselement
- 205: Betätigungselement
- 206': erstes Verriegelungsmittel
- 206": erstes Verriegelungsmittel
- 207': erstes Verriegelungsmittel
- 207": erstes Verriegelungsmittel
- 208: zapfenförmiger Vorsprung
- 209: Feder
- 210: Schulter
- 211: Wandschräge
- 212: Führungsleiste
- 213: Führungskanal
- 214: Formeinsatz
- 215: Federelement
- 216: Federelement
- 217: Zentrierelemente
- 218: Auswerferstange
- 219: Zentrierung
- 220: Stirnseite
- 221: Zentrierelemente
- 222: Kanäle für Temperiermittel
- 223: Griffflächen
- 224: Zentrierleistenaufnahmen
- 225: Zentrierleisten
- 226: Griffflächen
- 227: Formeinsatz
- 228: Zentrieröffnungen
- 229: Führungskanal
- 230: Auswerferhalteplatte
- 231: Auswerfergrundplatte
- 232: Auswerfereinrichtung
- 236': Stamm-Auswerferdruckplatte
- 236": Stamm-Auswerferhalteplatte
- 236: Stamm-Auswerferhaltevorrichtung
- 237': zweite Verriegelungsposition
- 237": zweite Verriegelungsposition
- 238: Schulterflächen
- 239: Schulter
- 240': zweites Verriegelungsmittel
- 240": zweites Verriegelungsmittel
- 241: Schulterpassschraube
- 243': erste Verriegelungsposition
- 243": erste Verriegelungsposition
- 245': Trägerplatte
- 245": Trägerplatte
- 250: erste Verriegelungsposition
- 251: zweite Verriegelungsposition
- 251': zweite Verriegelungsposition
- 251": zweite Verriegelungsposition
- 251‴: zweite Verriegelungsposition
- 252: Gleitführung

## Patentansprüche

1. Werkzeugelement für ein Werkzeug zum Spritzgießen von Kunststoffteilen, wobei das Werkzeugelement zumindest aus einer ersten Baueinheit (61, 61', 61") und aus einer zweiten Baueinheit (62, 62', 62") zusammengesetzt ist, wobei an der zweiten Baueinheit (62, 62', 62") zumindest ein der ersten Baueinheit (61, 61', 61") zugeordneter Formeinsatz (1, 2 und/oder 214) zur Bildung des Formenhohlraums befestigt ist und
wobei in dem Werkzeugelement mit dem Formeinsatz (1, 2 und/oder 214) eine Auswerfereinrichtung (82, 83, 232) zum Auswerfen von fertig gespritzten Spritzgussteilen kombiniert ist,
und wobei zumindest der eine Formeinsatz (1, 2 und/oder 214) und die Auswerfereinrichtung (82, 83, 232) die erste Baueinheit (61, 61', 61") bilden und wobei die erste Baueinheit (61, 61', 61") lösbar an der zweiten Baueinheit (62, 62', 62") des zugeordneten Werkzeugelements angeordnet ist,
derart, dass die erste Baueinheit (61, 61', 61") in einer vorbestimmten Stapelrichtung (S) in die zweite Baueinheit (62, 62', 62") zumindest bereichsweise ein- und/oder aufsteckbar und in Stapelrichtung (S) gelagert ist
**dadurch gekennzeichnet, dass**
die erste Baueinheit (61, 61', 61") mit der zweiten Baueinheit (62, 62', 62") durch einen Verriegelungsmechanismus verbunden ist, welcher mit einem ersten Verriegelungsmittel (206', 206") den Formeinsatz (1, 2 und/oder 214) mit der zweiten Baueinheit (62, 62', 62") an einer ersten Position (243', 243", 250) verriegelt und mit einem zweiten Verriegelungsmittel (240', 240") die Auswerfereinrichtung (82, 83, 232) mit der zweiten Baueinheit (62, 62', 62") an einer zweiten Position (237', 237", 251, 251', 251", 251‴) verriegelt,
wobei die ersten und/oder die zweiten Verriegelungsmittel (206', 206",240', 240") beweglich gelagert sind und **dass** das Betätigungselement (4, 204) linear beweglich oder rotierbar gelagert ist.

2. Werkzeugelement für ein Werkzeug zum Spritzgießen von Kunststoffteilen, insbesondere Werkzeugelement nach Anspruch 1, wobei das Werkzeugelement zumindest aus einer ersten Baueinheit (61") und aus einer zweiten Baueinheit (62") zusammengesetzt ist, wobei an der zweiten Baueinheit (62") zumindest ein der ersten Baueinheit (61") zugeordneter Formeinsatz (214, 227) zur Bildung des Formenhohlraums befestigt ist und
wobei die erste Baueinheit (61") lösbar an der zweiten Baueinheit (62") des zugeordneten Werkzeugelements angeordnet ist,
derart, dass die erste Baueinheit (61") in einer vorbestimmten Stapelrichtung (S) in die zweite Baueinheit (62") zumindest bereichsweise ein- und/oder aufsteckbar und in Stapelrichtung (S) gelagert ist
**dadurch gekennzeichnet, dass**
die erste Baueinheit (61") mit der zweiten Baueinheit (62") durch einen Verriegelungsmechanismus verbunden ist, welcher derart ausgebildet ist, dass im entriegelten Zustand die erste Baueinheit (61") aus der zweiten Baueinheit (62") bereichsweise hervorsteht unter Bereitstellung einer Grifffläche (223, 226) zur Entnahme der ersten Baueinheit (61").

3. Werkzeugelement nach Anspruch 1 oder 2, **dadurch gekennzeichnet, dass** das erste und das zweite Verriegelungsmittel einen Verriegelungsmechanismus aufweist, mittels welchem eine Entriegelungsposition und eine Position der Verriegelung (237', 237", 243', 243", 250, 251, 251', 251", 251‴) des ersten als auch des zweiten Verriegelungsmittels (206', 206",240', 240") einstellbar ist und welcher Verriegelungsmechanismus durch ein einziges Betätigungselement (4, 204) welches vorzugsweise dem Werkzeugelement zugeordnet ist, bedienbar ist.

4. Werkzeugelement nach einem der vorhergehenden Ansprüche, **dadurch gekennzeichnet, dass** der Formeinsatz, vorzugsweise eine Mehrzahl an Formeinsätzen, des Werkzeugelements rahmenlos auf einer ersten Halteplatte des Werkzeugelements oder einer auf der ersten Halteplatte angeordneten Trägerplatte des Werkzeugelements angeordnet sind.

5. Werkzeugelement nach einem der vorhergehenden Ansprüche, **dadurch gekennzeichnet, dass** das erste und das zweite Verriegelungsmittel (206', 206",240', 240") voneinander mechanisch entkoppelbar sind.

6. Werkzeugelement nach einem der vorhergehenden Ansprüche, **dadurch gekennzeichnet, dass** die Auswerfereinrichtung (82, 83, 232) im Werkzeugelement beweglich, insbesondere linear beweglich, angeordnet ist und dass der Verriegelungsmechanismus in Abhängigkeit von der Position der Auswerfereinrichtung (82, 83, 232) im Werkzeugelement bereitstellbar ist..

7. Werkzeugelement nach einem der vorhergehenden Ansprüche, **dadurch gekennzeichnet, dass** die Verriegelungsmittel (206', 206",240', 240") durch eines oder mehrere Betätigungselemente (4, 204), insbesondere durch ein einziges Betätigungselement (4, 204), bedienbar sind, welches Betätigungselement (4, 204) dem Werkzeugelement zugeordnet ist, wobei das Betätigungselement (4, 204) eine Werkzeugaufnahme (204') zur mechanischen Verbindung mit einem Werkzeug aufweist, wobei die Werkzeugaufnahme (204') seitlich, insbesondere an einer zur Kontaktfläche mit einem zweiten Werkzeugelement benachbarten Seite, am Werkzeugelement angeordnet ist.

8. Werkzeugelement nach einem der vorherigen Ansprüche, **dadurch gekennzeichnet, dass** das Werkzeugelement mehrere im Wesentlichen identische erste Baueinheiten (61, 61', 61") aufweist, welche durch Betätigen des einzigen Betätigungselements (4, 204) von der zweiten Baueinheit (62, 62', 62") lösbar sind.

9. Werkzeugelement nach einem der vorherigen Ansprüche, **dadurch gekennzeichnet, dass** die Auswerfereinrichtung (82, 83, 232) und der Formeinsatz (1, 2, und/oder 214) durch mechanische Verbindungsmittel (10, 10', 241) miteinander verbunden sind.

10. Werkzeugelement nach einem der vorherigen Ansprüche, **dadurch gekennzeichnet, dass** die ersten und/oder die zweiten Verriegelungsmittel (206', 206",240', 240") federnd gelagert sind.

11. Werkzeugelement nach einem der vorhergehenden Ansprüche, **dadurch gekennzeichnet, dass** das erste mechanische Verbindungsmittel (206, 206") bereichsweise als Zahnstange ausgebildet ist, wobei sich die Zahnung der Zahnstange in Eingriff mit einem Zahnrad oder einer Gegenzahnung des Betätigungsmittels (204') befindet.

12. Werkzeugelement nach einem der vorhergehenden Ansprüche, **dadurch gekennzeichnet, dass** eine Gleitführung (252) zwischen dem ersten mechanischen Verbindungsmittel (79, 206') und einem Kupplungsstück mit einem zapfenförmigen Vorsprung (73, 208) erfolgt, welcher mit dem zweiten mechanischen Verbindungsmittel (240', 240") wechselwirkt.

13. Werkzeugelement nach einem der vorhergehenden Ansprüche, **dadurch gekennzeichnet, dass** der Formeinsatz (1, 2 und/oder 214), vorzugsweise eine Mehrzahl an Formeinsätzen (1, 2 und/oder 214) des Werkzeugelements, auf einer oder mehreren Trägerplatten (23, 23', 245', 245") gelagert sind, welche sich im zusammengesetzten Zustand des Werkzeugelements zwischen dem Formeinsatz (1, 2 und/oder 214) oder den Formeinsätzen (1, 2 und/oder 214) und der zweiten Baueinheit (62, 62', 62") befindet.

14. Werkzeugelement nach einem der vorhergehenden Ansprüche, **dadurch gekennzeichnet, dass** zwischen jeweils zwei Anschlagseiten der ersten und der zweiten Baueinheit (61, 61', 61" und 62, 62', 62") und/oder daran angebrachten mechanischen Verbindungsmitteln (20), welche Anschlagseiten die Beweglichkeit der ersten Baueinheit (61) gegenüber der zweiten Baueinheit (62) begrenzen zumindest ein Spalt (22a, 105) mit einer Spaltbreite von zumindest 1µm, vorzugsweise zumindest 3 µm vorliegt.

15. Verfahren zur Entnahme eines Formeinsatzes (1, 2, 214 und/oder 227) aus einem Werkzeugelement nach einem der vorhergehenden Ansprüche, **gekennzeichnet durch die folgenden Schritte:**
I Bedienung eines einzigen Betätigungsmittels (4, 204, 205), um den Formeneinsatz (1, 2, 214 und/oder 227) in eine Entriegelungsposition zu versetzen und
II. Entnahme des Formeinsatzes (1, 2, 214 und/oder 227).

16. Verfahren nach Anspruch 18, **dadurch gekennzeichnet, dass** bei Bedienung des Betätigungsmittels (4, 204, 205) eine Entriegelung des Formeinsatzes (1, 2, 214 und/oder 227) und einer mit dem Formeinsatz (1, 2, 214 und/oder 227) verbundenen Auswerfereinrichtung (82, 83, 232) erfolgt.

## Claims

1. Tool element for a tool for the injection molding of plastic parts, wherein the tool element is composed at least of a first assembly (61, 61', 61") and of a second assembly (62, 62', 62"), wherein at least one mold insert (1, 2 and/or 214) associated with the first assembly (61, 61', 61") is fastened to the second assembly (62, 62', 62") in order to form the mold cavity, and
wherein an ejecting device (82, 83, 232) for ejecting completely injection-molded injection molded parts is combined in the tool element with the mold insert (1, 2 and/or 214),
and wherein at least the one mold insert (1, 2 and/or 214) and the ejecting device (82, 83, 232) form the first assembly (61, 61', 61"), and wherein the first assembly (61, 61', 61") is detachably arranged on the second assembly (62, 62', 62") of the associated tool element in such a way that the first assembly (61, 61', 61") can be inserted and/or fitted into the second assembly (62, 62', 62") at least in some regions in a predetermined stacking direction (S) and is mounted in the stacking direction (S),
**characterized in that**
the first assembly (61, 61', 61") is connected to the second assembly (62, 62', 62") by means of a locking mechanism, which locks the mold insert (1, 2 and/or 214) to the second assembly (62, 62', 62") at a first position (243', 243", 250) by means of a first locking means (206', 206") and locks the ejecting device (82, 83, 232) to the second assembly (62, 62', 62") at a second position (237', 237", 251, 251', 251", 251‴) by means of a second locking means (240', 240"),
wherein the first and/or the second locking means (206', 206", 240', 240") are movably mounted, and **in that** the actuating element (4, 204) is linearly movable or rotatably mounted.

2. Tool element for a tool for injection molding plastic parts, in particular tool element according to claim 1, wherein the tool element is composed at least of a first assembly (61") and of a second assembly (62"), wherein at least one mold insert (214, 227) associated with the first assembly (61") is fastened to the second assembly (62") to form the mold cavity, and
wherein the first assembly (61") is detachably arranged on the second assembly (62") of the associated tool element such that the first assembly (61") can be inserted and/or fitted in a predetermined stacking direction (S) into the second assembly (62") at least in some regions and is mounted in the stacking direction (S),
**characterized in that**
the first assembly (61") is connected to the second assembly (62") by a locking mechanism which is designed in such a way that, in the unlocked state, the first assembly (61") projects in some regions from the second assembly (62") while providing a gripping surface (223, 226) for removing the first assembly (61").

3. Tool element according to claim 1 or 2, **characterized in that** the first and the second locking means comprise a locking mechanism by means of which an unlocking position and a position of locking (237', 237", 243', 243", 250, 251, 251', 251", 251‴) of the first as well as of the second locking means (206', 206", 240', 240") is adjustable and which locking mechanism is operable by a single actuating element (4, 204) which is preferably associated with the tool element.

4. Tool element according to one of the preceding claims, **characterized in that** the mold insert, preferably a plurality of mold inserts, of the tool element are arranged frameless on a first holding plate of the tool element or a carrier plate of the tool element arranged on the first holding plate.

5. Tool element according to one of the preceding claims, **characterized in that** the first and the second locking means (206', 206",240', 240") can be mechanically decoupled from each other.

6. Tool element according to one of the preceding claims, **characterized in that** the ejecting device (82, 83, 232) is arranged movably, in particular linearly movably, in the tool element, and **in that** the locking mechanism can be provided depending on the position of the ejecting device (82, 83, 232) in the tool element.

7. Tool element according to one of the preceding claims, **characterized in that** the locking means (206', 206",240', 240") are operable by one or more actuating elements (4, 204), in particular by a single actuating element (4, 204), which actuating element (4, 204) is associated with the tool element, wherein the actuating element (4, 204) has a tool receptacle (204') for mechanical connection to a tool, wherein the tool receptacle (204') is arranged laterally on the tool element, in particular on a side adjacent to the contact surface to a second tool element.

8. Tool element according to one of the preceding claims, **characterized in that** the tool element comprises a plurality of substantially identical first assemblies (61, 61', 61") which are detachable from the second assembly (62, 62', 62") by actuating the single actuating element (4, 204).

9. Tool element according to one of the preceding claims, **characterized in that** the ejecting device (82, 83, 232) and the mold insert (1, 2, and/or 214) are connected to each other by mechanical connecting means (10, 10', 241).

10. Tool element according to one of the preceding claims, **characterized in that** the first and/or the second locking means (206', 206", 240', 240") are spring-mounted.

11. Tool element according to one of the preceding claims, **characterized in that** the first mechanical connecting means (206, 206") is formed in some regions as a toothed rack, wherein the toothing of the toothed rack is in engagement with a gearwheel or a mating toothing of the actuating means (204').

12. Tool element according to one of the preceding claims, **characterized in that** a sliding guide (252) is provided between the first mechanical connecting means (79, 206') and a coupling piece having a pin-shaped projection (73, 208) which interacts with the second mechanical connecting means (240', 240").

13. Tool element according to one of the preceding claims, **characterized in that** the mold insert (1, 2 and/or 214), preferably a plurality of mold inserts (1, 2 and/or 214) of the tool element, are mounted on one or more carrier plates (23, 23', 245', 245") which, in the assembled state of the tool element, are located between the mold insert (1, 2 and/or 214) or the mold inserts (1, 2 and/or 214) and the second assembly (62, 62', 62").

14. Tool element according to one of the preceding claims, **characterized in that** between in each case two stop sides of the first and the second assembly (61, 6T, 61" and 62, 62', 62") and/or mechanical connecting means (20) attached thereto, which stop sides limit the mobility of the first assembly (61) relative to the second assembly (62), there is at least one gap (22a, 105) with a gap width of at least 1 µm, preferably at least 3 µm.

15. Method for removing a mold insert (1,2, 214 and/or 227) from a tool element according to one of the preceding claims, **characterized by the following steps:**
I operating a single actuating means (4, 204, 205) to move the mold insert (1, 2, 214 and/or 227) into an unlocking position; and
II removing the mold insert (1, 2, 214 and/or 227).

16. Method according to claim 18, **characterized in that,** when the actuating means (4, 204, 205) is operated, an unlocking of the mold insert (1, 2, 214 and/or 227) and of an ejecting device (82, 83, 232) connected to the mold insert (1, 2, 214 and/or 227) takes place.

## Revendications

1. Élément d'outil pour un outil de moulage par injection de pièces en plastique, lequel élément d'outil est composé d'au moins une première unité de construction (61, 61', 61") et d'une deuxième unité de construction (62, 62', 62"), dans lequel au moins un insert de moule (1, 2 et/ou 214) associé à la première unité de construction (61, 61', 61") est fixé sur la deuxième unité de construction (62, 62', 62") pour former la cavité de moule et un dispositif éjecteur (82, 83, 232) destiné à éjecter des pièces moulées par injection finies est combiné à l'insert de moule (1, 2 et/ou 214) dans l'élément d'outil, et dans lequel au moins un insert de moule (1, 2 et/ou 214) et le dispositif éjecteur (82, 83, 232) forment la première unité de construction (61, 61', 61") et dans lequel la première unité de construction (61, 61', 61") est disposée de façon amovible sur la deuxième unité de construction (62, 62', 62") de l'élément d'outil associé, de telle manière que la première unité de construction (61, 61', 61") est emboîtable et/ou superposable au moins en partie dans un sens d'empilage défini (S) dans la deuxième unité de construction (62, 62', 62") et supportée dans le sens d'empilage (S),
**caractérisé en ce que** la première unité de construction (61, 61', 61") est assemblée avec la deuxième unité de construction (62, 62', 62") par un mécanisme de verrouillage qui verrouille l'insert de moule (1, 2 et/ou 214) avec la deuxième unité de construction (62, 62', 62") dans une première position (243', 243", 250) avec un premier moyen de verrouillage (206', 206") et le dispositif éjecteur (82, 83, 232) avec la deuxième unité de construction (62, 62', 62") dans une deuxième position (237', 237", 251, 251', 251", 251‴) avec un deuxième moyen de verrouillage (240', 240"), les premier et/ou deuxième moyens de verrouillage (206', 206", 240', 240") étant supportés de façon mobile, et **en ce que** l'élément d'actionnement (4, 204) est supporté avec possibilité de déplacement linéaire ou de rotation.

2. Élément d'outil pour un outil de moulage par injection de pièces en plastique, en particulier élément d'outil selon la revendication 1, lequel élément d'outil est composé au moins d'une première unité de construction (61") et d'une deuxième unité de construction (62"), dans lequel un insert de moule (214, 227) associé à la première unité de construction (61") est fixé sur la deuxième unité de construction (62") pour former la cavité de moule et dans lequel la première unité de construction (61") est disposée de façon amovible sur la deuxième unité de construction (62") de l'élément d'outil associé, de telle manière que la première unité de construction (61") est emboîtable et/ou superposable au moins en partie dans un sens d'empilage défini (S) dans la deuxième unité de construction (62") et supportée dans le sens d'empilage (S),
**caractérisé en ce que** la première unité de construction (61") est assemblée avec la deuxième unité de construction (62") par un mécanisme de verrouillage qui est conformé de telle manière que, dans l'état déverrouillé, la première unité de construction (61") dépasse en partie de la deuxième unité de construction (62") en formant une surface de préhension (223, 226) pour l'enlèvement de la première unité de construction (61").

3. Élément d'outil selon la revendication 1 ou 2, **caractérisé en ce que** les premier et deuxième moyens de verrouillage présentent un mécanisme de verrouillage au moyen duquel une position de déverrouillage et une position de verrouillage (237', 237", 243', 243", 250, 251, 251', 251", 251‴) du premier moyen de verrouillage comme du deuxième (206', 206", 240', 240") peuvent être établies, le mécanisme de verrouillage pouvant être actionné par un élément d'actionnement unique (4, 204) qui est de préférence associé à l'élément d'outil.

4. Élément d'outil selon l'une des revendications précédentes, **caractérisé en ce que** l'insert de moule, de préférence plusieurs inserts de moule, de l'élément d'outil est disposé sans cadre sur une première plaque de maintien de l'élément d'outil ou sur une plaque de support de l'élément d'outil disposée sur la première plaque de maintien.

5. Élément d'outil selon l'une des revendications précédentes, **caractérisé en ce que** les premier et deuxième éléments de verrouillage (206', 206", 240', 240") peuvent être découplés mécaniquement l'un de l'autre.

6. Élément d'outil selon l'une des revendications précédentes, **caractérisé en ce que** le dispositif éjecteur (82, 83, 232) est disposé de façon mobile dans l'élément d'outil, en particulier avec possibilité de translation linéaire, et **en ce que** le mécanisme de verrouillage peut être présenté dans l'élément d'outil en fonction de la position du dispositif éjecteur (82, 83, 232).

7. Élément d'outil selon l'une des revendications précédentes, **caractérisé en ce que** les moyens de verrouillage (206', 206", 240', 240") peuvent être commandés par un ou plusieurs éléments d'actionnement (4, 204), en particulier par un seul élément d'actionnement (4, 204), lequel élément d'actionnement (4, 204) est associé à l'élément d'outil, l'élément d'actionnement (4, 204) présentant un réceptacle d'outil (204') pour l'assemblage mécanique avec un outil, lequel réceptacle d'outil (204') est disposé latéralement sur l'élément d'outil, en particulier sur un côté voisin de la surface de contact avec un deuxième élément d'outil.

8. Élément d'outil selon l'une des revendications précédentes, **caractérisé en ce que** l'élément d'outil comporte plusieurs premières unités de construction (61, 61', 61") sensiblement identiques, qui peuvent être détachées de la deuxième unité de construction (62, 62', 62") par l'actionnement de l'élément d'actionnement unique (4, 204).

9. Élément d'outil selon l'une des revendications précédentes, **caractérisé en ce que** le dispositif éjecteur (82, 83, 232) et l'insert de moule (1, 2, et/ou 214) sont reliés l'un à l'autre par des moyens de liaison mécaniques (10, 10', 241).

10. Élément d'outil selon l'une des revendications, précédentes, **caractérisé en ce que** les premier et/ou deuxième moyens de verrouillage (206', 206", 240', 240") sont supportés de façon élastique.

11. Élément d'outil selon l'une des revendications précédentes, **caractérisé en ce que** le premier moyen de liaison mécanique (206, 206") est conformé par zones comme une crémaillère dont la denture est en prise avec une roue dentée ou avec une denture correspondante du moyen d'actionnement (204').

12. Élément d'outil selon l'une des revendications précédentes, **caractérisé en ce qu'**un guidage coulissant (252) est réalisé entre le premier moyen de liaison mécanique (79, 206') et une pièce d'accouplement munie d'une saillie conique (73, 208) qui interagit avec le deuxième moyen de liaison mécanique (240', 240").

13. Élément d'outil selon l'une des revendications précédentes, **caractérisé en ce que** l'insert de moule (1, 2 et/ou 214), de préférence plusieurs inserts de moule (1, 2 et/ou 214), de l'élément d'outil est supporté sur une ou plusieurs plaques de support (23, 23', 245', 245") qui se trouvent, dans l'état assemblé de l'élément d'outil, entre l'insert de moule (1, 2 et/ou 214) ou les inserts de moule (1, 2 et/ou 214) et la deuxième unité de construction (62, 62', 62").

14. Élément d'outil selon l'une des revendications précédentes, **caractérisé en ce qu'**au moins un interstice (22a, 105) ayant une largeur d'au moins 1 µm, de préférence d'au moins 3 µm, est présent entre deux côtés de butée de la première unité de construction et de la deuxième (61, 61', 61" et 62, 62', 62") et/ou des moyens de liaison mécaniques (20) montés dessus, lesquels côtés de butée limitent la mobilité de la première unité de construction (61) par rapport à la deuxième unité de construction (62).

15. Procédé pour l'enlèvement d'un insert de moule (1, 2, 214 et/ou 227) d'un élément d'outil selon l'une des revendications précédentes, **caractérisé en ce qu'**il comprend les étapes suivantes :
I. manœuvre d'un moyen d'actionnement unique (4, 204, 205) pour amener l'insert de moule (1, 2, 214 et/ou 227) dans une position de déverrouillage et
II. enlèvement de l'insert de moule (1, 2, 214 et/ou 227).

16. Procédé selon la revendication 18, **caractérisé en ce que**, lors de la manœuvre du moyen d'actionnement (4, 204, 205), il se produit un déverrouillage de l'insert de moule (1, 2, 214 et/ou 227) et d'un dispositif éjecteur (82, 83, 232) relié à l'insert de moule (1, 2, 214 et/ou 227).
